# EUROPÄISCHE PATENTSCHRIFT

(11) **EP 4 468 652 B1**
(45) Veröffentlichungstag und Bekanntmachung des Hinweises auf die Patenterteilung: **04.02.2026**
(21) Anmeldenummer: 24177048.6
(22) Anmeldetag: 21.05.2024
(51) Int. Cl.: H04L 9/32, G06F 21/00, H04L 51/04, H04L 9/40

(54) **FERNSIGNATURDIENST UNTER VERWENDUNG EINES INSTANT-MESSAGING-DIENSTES**
REMOTE SIGNATURE SERVICE USING INSTANT MESSAGING SERVICE
SERVICE DE SIGNATURE À DISTANCE UTILISANT UN SERVICE DE MESSAGERIE INSTANTANÉE

(30) Priorität: 23.05.2023 DE 102023113422
(43) Veröffentlichungstag der Anmeldung: 27.11.2024
(73) Patentinhaber: Bundesdruckerei GmbH, 10969 Berlin (DE)
(72) Erfinder: SIEBERT, Martin, 10965 Berlin (DE)
(74) Vertreter: Richardt Patentanwälte PartG mbB

(56) Entgegenhaltungen:
- DE-B4- 102015 208 098
- US-A1- 2004 210 772
- US-A1- 2013 036 302

## Beschreibung

### GEBIET DER TECHNIK

Die Erfindung betrifft ein Verfahren, einen Server und ein System zum Bereitstellen eines Fernsignaturdienstes unter Verwendung eines Instant-Messaging-Dienstes.

### STAND DER TECHNIK

Im Zuge der zunehmenden Digitalisierung, Automatisierung und Vernetzung in allen Lebens- und Arbeitsbereichen nehmen kryptographische Verfahren zur Absicherung der dabei verarbeiteten digitalen Daten eine zentrale Bedeutung ein. Ein wesentlicher Baustein dieser kryptographischen Verfahren sind digitale Signaturen. Dabei kommen digitale Signaturen in vielfältigen Bereichen zum Einsatz, wie beispielsweise im E-Government (E-Regierung), in der E-Justiz (elektronischer Rechtsverkehr), im E-Commerce (Onlinehandel) und bei ähnlichen Vertragsunterzeichnungen in der Privatwirtschaft, aber auch bei diversen Formen des privaten Datenaustauschs. Digitale Signaturen kommen ganz allgemein als kryptographische Mittel zur Bestätigung von Daten, insbesondere von deren Ursprung und/oder deren Authentizität zum Einsatz. Dokument US2004210772 beschreibt Verfahren und Vorrichtung für sicheres Instant Messaging unter Verwendung einer serverüberwachten Veröffentlichung.

Es ist eine Aufgabe der Erfindung, ein verbessertes Verfahren zum Erstellen digitaler Siganturen bereitzustellen. Die der Erfindung zugrundeliegenden Aufgaben werden durch die Merkmale der unabhängigen Ansprüche gelöst. Ausführungsformen der Erfindung sind in den abhängigen Ansprüchen angegeben.

### ZUSAMMENFASSUNG

In einem Aspekt ist ein Verfahren offenbart zum Bereitstellen eines Fernsignaturdienstes unter Verwendung eines Instant-Messaging-Dienstes. Das Verfahren umfasst durch einen Server des Fernsignaturdienstes:
- Registrieren eines Nutzers zur Verwendung des Fernsignaturdienstes, wobei das Registrieren umfasst:
   ∘ Empfangen einer Registrierungsanfrage zum Registrieren des Nutzers von einem Computersystem des Nutzers über ein Netzwerk, wobei die Registrierungsanfrage eine nutzerseitige erste Telefonnummer des Nutzers umfasst,
   o Erzeugen und serverseitiges Speichern eines dem registrierten Nutzer eindeutig zugeordneten asymmetrischen Schlüsselpaars, wobei das asymmetrische kryptographische Schlüsselpaar einen privaten kryptographischen Schlüssel als Signaturschlüssel zum Erstellen von digitalen Signaturen des Nutzers und einen öffentlichen kryptographischen Schlüssel als Signaturprüfschlüssel zum Prüfen von mit dem Signaturschlüssel erstellten digitalen Signaturen umfasst,
   o Erzeugen einer dem registrierten Nutzer eindeutig zugeordneten serverseitigen zweiten Telefonnummer,
   o Einrichten eines serverseitigen Instant-Messaging-Accounts bei dem Instant-Messaging-Dienst unter Verwendung der dem Nutzer eindeutig zugeordneten serverseitigen zweiten Telefonnummer,
   o Senden einer Kontaktanfrage von dem serverseitigen Instant-Messaging-Account an einen nutzerseitigen Instant-Messaging-Account unter Verwendung der nutzerseitigen ersten Telefonnummer,
   o Empfangen einer Kontaktbestätigung von dem nutzerseitigen Instant-Messaging-Account als Bestätigung eines erfolgreichen Einrichtens des Fernsignaturdienstes über den Instant-Messaging-Dienst,
- Empfangen einer Signaturanfrage zum Erstellen einer digitalen Signatur für ein digitales Dokument mit dem Signaturschlüssel vom dem nutzerseitigen Instant-Messaging-Account über den serverseitigen Instant-Messaging-Account,
- Erstellen einer digitalen Signatur für das zu signierende digitale Dokument unter Verwendung des Signaturschlüssels,
- Senden der digitalen Signatur über den serverseitigen Instant-Messaging-Account an den nutzerseitigen Instant-Messaging-Account.

Beispiele ermöglichen ein einfaches und sicheres Signieren von Daten bzw. digitalen Dokumenten unter Verwendung eines Instant-Massaging-Dienstes. Zur Nutzung eines Fernsignaturdienstes unter Verwendung eines Instant-Massaging-Dienstes muss sich ein Nutzer zunächst bei dem entsprechenden Fernsignaturdienstes registrieren. Hierzu sendet der Nutzer eine Registrierungsanfrage an einen Server des Fernsignaturdienstes. Beispielsweise ruft der Nutzer unter Verwendung eines Browsers mittels eines Computersystems eine über das Internet von dem Server bereitgestellte Registrierungsseite auf und gibt dort in eine Registrierungsmaske die zur Registrierung notwendigen Registrierungsdaten ein. Dabei erfolgt die Datenübermittlung zwischen Server und Computersystem beispielsweise über eine mittels Ende-zu-Ende-Verschlüsselung gesicherte Kommunikationsverbindung, beispielsweise unter Verwendung eines HTTPS-Session. Bei dem zur Registrierung verwendeten Computersystem handelt es sich beispielsweise um dasselbe Gerät, etwa ein Smartphone, mit welchem anschließend Signaturen unter Verwendung des Fernsignaturdienstes erstellt werden sollen. Beispielsweise handelt es sich bei dem zur Registrierung verwendeten Computersystem um ein anderes Gerät als das, mit welchem anschließend Signaturen unter Verwendung des Fernsignaturdienstes erstellt werden sollen.

Beispielsweise umfassen die angegebenen Registrierungsdaten zu verifizierende Kontaktdaten des Nutzers, etwa die nutzerseitige erste Telefonnummer des Nutzers und/oder eine E-Mail-Adresse des Nutzers. Zum Verifizieren der in der Registrierungsanfrage angegebenen nutzerseitigen ersten Telefonnummer sendet der Server beispielsweise eine Aktivierungs-TAN in Form einer SMS-TAN mittels einer SMS an die nutzerseitige erste Telefonnummer. Alternativerweise kann die Aktivierungs-TAN beispielsweise auch mittels einer automatisch generierten Sprachnachricht an die nutzerseitige erste Telefonnummer gesendet werden. Diese nutzerseitige erste Telefonnummer ist erfolgreich verifiziert, wenn der Nutzer diese dem Server korrekt mitteilt, etwa in ein entsprechendes Eingabefeld auf der Registrierungsseite des Fernsignaturdienstes eingibt. Hierdurch bestätigt der Nutzer den erfolgreichen Empfang der Aktivierungs-TAN über die angegebene nutzerseitige erste Telefonnummer. Zum Verifizieren einer E-Mail-Adresse des Nutzers sendet der Server beispielweise eine Aktivierungs-E-Mail mit einem Aktivierungslink an die E-Mail-Adresse des Nutzers. Die E-Mail-Adresse des Nutzers ist erfolgreich verifiziert, wenn der Nutzer auf den Aktivierungslink klickt und damit den Empfang der Aktivierungs-E-Mail über die angegebene E-Mail-Adresse bestätigt.

Bei der angegebenen nutzerseitigen ersten Telefonnummer handelt es sich beispielsweise um eine Mobilfunknummer eines mobilen tragbaren Endgeräts des Nutzers, wie etwa eines Smartphones.

Beispielsweise im Zuge des Registrierens des Nutzers erzeugt der Server des Fernsignaturdienstes ein asymmetrisches kryptographisches Schlüsselpaar für den Nutzer und speichert dieses serverseitig. Das asymmetrische kryptographische Schlüsselpaar umfasst einen privaten kryptographischen Schlüssel als Signaturschlüssel zum Erstellen von digitalen Signaturen des Nutzers und einen öffentlichen kryptographischen Schlüssel als Signaturprüfschlüssel zum Prüfen von mit dem Signaturschlüssel erstellten digitalen Signaturen. Das entsprechende asymmetrische kryptographische Schlüsselpaar wird dem registrierten Nutzer eindeutig zugeordnet. Beispielsweise wird ein Zertifikat erstellt, welches den Signaturprüfschlüssel und damit das asymmetrische kryptographische Schlüsselpaar dem Nutzer zuordnet. Bei dem entsprechenden Zertifikat handelt es sich beispielsweise um ein Zertifikat einer PKI. Beispielsweise wird das entsprechende Zertifikat von dem Fernsignaturdienst unter Verwendung des Servers ausgestellt. Beispielsweise wird das entsprechende Zertifikat von einem Ausstellerdienst auf Anfrage des Servers des Fernsignaturdienstes ausgestellt.

Zum Bereitstellen eines individuellen Fernsignaturdienstes für den registrierten Nutzer über den Instant-Massaging-Dienst erzeugt der Server eine serverseitige zweite Telefonnummer, welche eindeutig dem registrierten Nutzer zugeordnet wird. Unter Verwendung dieser serverseitigen zweiten Telefonnummer, welche dem registrierten Nutzer eindeutig zugeordneten ist, richtet der Server einen serverseitigen Instant-Messaging-Account bei dem Instant-Messaging-Dienst ein. Dieser Instant-Messaging-Account dient ausschließlich dazu dem individuellen Nutzer, welchem die serverseitige zweite Telefonnummer zugeordnet ist, einen Fernsignaturdienst bereitzustellen. Der resultierende serverseitige Instant-Messaging-Account ist der serverseitigen zweiten Telefonnummer zugeordnet.

Um dem Nutzer die entsprechende serverseitige zweite Telefonnummer mittzuteilen, unter deren Verwendung der Nutzer den über den Instant-Messaging-Dienst bereitgestellten Fernsignaturdienst nutzen kann, wird eine Kontaktanfrage von dem serverseitigen Instant-Messaging-Account an einen nutzerseitigen Instant-Messaging-Account unter Verwendung der nutzerseitigen ersten Telefonnummer. Beispielsweise ist es Voraussetzung zur Nutzung des Fernsignaturdienstes über den Instant-Messaging-Dienst nutzerseitigen Instant-Messaging-Account verfügt, welcher unter Verwendung der nutzerseitigen ersten Telefonnummer eingerichtet bzw. dieser zugeordnet ist. Der Nutzer bestätigt den Empfang der Kontaktanfrage und damit der serverseitigen zweiten Telefonnummer durch Senden einer Kontaktbestätigung von dem nutzerseitigen Instant-Messaging-Account an den serverseitigen Instant-Messaging-Account. Damit wird zudem das erfolgreiche Einrichten des Fernsignaturdienstes über den Instant-Messaging-Dienst bestätigt.

Ist der Nutzer registriert, ein dem Nutzer zugeordnetes asymmetrisches kryptographisches Schlüsselpaar serverseitig hinterlegt und ein serverseitiger Instant-Messaging-Account unter Verwendung der dem registrierten Nutzer eindeutig zugeordneten serverseitigen zweiten Telefonnummer eingerichtet, kann der Nutzer nun unter Verwendung seines nutzerseitigen Instant-Messaging-Account Signaturen für digitale Dokumente bei dem Fernsignaturdienst unter Verwendung der serverseitigen zweiten Telefonnummer anfragen. Hierzu sendet der Nutzer unter Verwendung eines mobilen tragbaren Endgeräts, beispielsweise eines Smartphones, von seinem nutzerseitigen Instant-Messaging-Account eine entsprechende Signaturanfrage an den serverseitigen Instant-Messaging-Account, welcher zu diesem Zweck individuell für den entsprechenden Nutzer eingerichtet wurde, und empfängt in Antwort die angefragte digitale Signatur zur weiteren Verfügung. Beispielsweise kann er die entsprechende Signatur, etwa über den Instant-Messaging-Dienst an einen Dritten weiterleiten.

Im Zuge des Bereitstellens des Fernsignaturdienstes über den Instant-Messaging-Dienst empfängt der Server des Fernsignaturdienstes die Signaturanfrage des Nutzers zum Erstellen einer digitalen Signatur für ein digitales Dokument mit dem Signaturschlüssel des Nutzers vom dem nutzerseitigen Instant-Messaging-Account über den serverseitigen Instant-Messaging-Account. Der Server erstellt eine digitale Signatur für das zu signierende digitale Dokument unter Verwendung des Signaturschlüssels und sendet die erstellte digitalen Signatur in Antwort auf die Signaturanfrage über den serverseitigen Instant-Messaging-Account an den nutzerseitigen Instant-Messaging-Account. Zum Erstellen der digitalen Signatur verwendet der Server beispielsweise einen Hashwert des digitalen Dokuments, welcher mit Signaturschlüssel des Nutzers verschlüsselt wird. Beispielsweise berechnet der Server den Hashwert des zu signierenden digitalen Dokuments zum Erstellen der digitalen Signatur. Beispielsweise wird dem Server der Hashwert des zu signierenden digitalen Dokuments zum Erstellen der digitalen Signatur bereitgestellt.

Unter einem digitalen Dokument wird hier allgemein ein digitaler Datensatz verstanden. Beispielsweise handelt es sich bei dem Datensatz um eine Datei, etwa eine Text-, Bild-, Audio - oder Videodatei. Bei einer solchen Textdatei kann es sich beispielsweise um ein Word-, Excel-, PDF-Dokument handeln.

Eine digitale Signatur basiert auf einem asymmetrisches Kryptosystem, bei dem ein Signierer unter Verwendung eines geheimen Signaturschlüssels, d.h. eines privaten kryptographischen Schlüssels, zu einem zu signierenden digitalen Dokument einen Wert berechnet, der als digitale Signatur bezeichnet wird. Bei diesem Wert handelt es sich beispielsweise um einen mit dem Signaturschlüssel verschlüsselten Hashwert des zu signierenden Dokuments. Dieser Wert ermöglicht es jedem, mit Hilfe eines öffentlichen Signaturprüfschlüssels, d.h. eines öffentlichen kryptographischen Schlüssels, den nichtabstreitbare Ursprungs seitens des Signierers und die Integrität des Dokuments zu prüfen. Um eine mit einem Signaturschlüssel erstellte Signatur einer Person oder Entität zuordnen zu können, muss der zugehörige Signaturprüfschlüssel dieser Person oder Entität zweifelsfrei zugeordnet sein. Eine solche zweifelsfreie Zuordnung kann beispielsweise mittels eines Zertifikats, insbesondere eines PKI-Zertifikats, sichergestellt werden, welches den Signaturprüfschlüssel beispielsweise umfasst und den Signaturprüfschlüssel einer bestimmten Person oder Entität zuordnet.

Gegenseitige Vereinbarungen in Form von Absprachen, Erklärungen spielen im alltäglichen Leben und insbesondere im Geschäftsleben eine wichtige Rolle. Hierzu werden beispielsweise Verträge in schriftlicher Form verwendet. Oftmals werden gegenseitige Vereinbarungen nur auf Vertrauensbasis getroffen ohne schriftliche Fixierung getroffen. Dies birgt jedoch das Risiko, dass getroffene Absprachen, Festlegungen oder Entscheidungen als Ganzes bzw. im Detail vergessen oder unterschiedlich interpretiert werden, was im ungünstigen Fall zu Missverständnissen und nachträglichen Auseinandersetzungen führen kann.

Durch die zunehmende mobile Kommunikation über mobile tragbare Endgeräte werden immer mehr Vereinbarungen unter Verwendung mobiler tragbarere Endgeräte getroffen. Das vorliegende Verfahren zum Bereitstellen eines Fernsignaturdienstes unter Verwendung eines Instant-Messaging-Dienstes ermöglicht es nun beispielsweise solche Vereinbarungen in Form digitaler Dokumente, welche den Inhalt der Vereinbarung beschreiben, von den betroffenen Teilnehmern auf einfache und schnelle Weise unter Verwendung des Instant-Messaging-Dienstes bestätigt, d.h. signiert, und archiviert werden können. Diese Bestätigung in Form des signierten digitalen Dokuments kann dann allen Teilnehmern zur Verfügung gestellt werden. Durch die digitale Signatur erhalten entsprechende Vereinbarungen beispielsweise den Status eines Vertrags. Ebenso ist es möglich, dass nur der signierende Teilnehmer das signierte Dokument für sich selbst als Nachweis der getroffenen Vereinbarung archiviert. Beispielsweise kann es sich bei dem signierten digitalen Dokument auch um eine Vereinbarung oder eine Beschreibung eines Sachverhalts handeln, welche von einer dritten Person bestätigt bzw. signiert wird.

Beispielsweise stellt der Nutzer das zu signierende digitalen Dokument bereit. Bei dem entsprechenden digitalen Dokument kann es sich beispielsweise allgemein um einen digitalen Datensatz handeln. Beispielsweise handelt es sich um einen mittels eines mobilen tragbaren Endgeräts des Nutzers ausgewählte oder erstellte Text-, Bild-, Audio -oder Videodatei. Beispielsweise handelt es sich um ein Foto. Beispielsweise handelt es sich um eine E-Mail.

Das entsprechende zu signierende digitale Dokument wird beispielsweise über den nutzerseitigen Instant-Messaging-Accounts an den für den Nutzer serverseitig zum Zwecke des Erstellens von digitalen Signaturen eingerichteten Instant-Messaging-Accounts gesendet. In Antwort empfängt der Nutzer beispielsweise das signierte digitale Dokument. Beispielsweise umfasst das signierte Dokument ferner einen Zeitstempel, welcher einen Zeitpunkt der Erstellung der digitalen Signatur angibt. Beispielsweise berechnet der Nutzer unter Verwendung seines mobilen tragbaren Endgeräts einen Hashwert des zu signierenden digitalen Dokuments und sendet diesen Hashwert über den nutzerseitigen Instant-Messaging-Accounts an den für den Nutzer serverseitiger zum Zwecke des Erstellens von digitalen Signaturen eingerichteten Instant-Messaging-Accounts. In Antwort empfängt der Nutzer beispielsweise die digitale Signatur. Diese digitale Signatur umfasst beispielsweise den unter Verwendung des Signaturschlüssels des Nutzers verschlüsselten Hashwert des zu signierenden Dokuments. Beispielsweise umfasst die Signatur ferner einen Zeitstempel, welcher einen Zeitpunkt der Erstellung der digitalen Signatur angibt.

Die digitale Signatur und/oder das signierte digitale Dokument kann dann von dem Nutzer an ein oder mehrere Kommunikationspartner weitergeleitet werden, beispielsweise unter Verwendung des Instant-Messaging-Dienstes. Ferner kann die digitale Signatur und/oder das signierte digitale Dokument von dem Nutzer beispielsweise auch, zusätzlich oder alternativ, in einem virtuellen Datenraum abgelegt werden. Die digitale Signatur belegt beispielsweise eine Zustimmung des Nutzers zu den von dem digitalen Dokument umfassten Daten.

Um sich ein bereits signiertes oder noch unsigniertes digitales Dokument von einem Dritten bestätigen zu lassen, kann die betroffene digitale Datei bzw. das entsprechende digitale Dokument an Dritte weiterleitet werden, etwa an einen Instant-Messaging-Account des Dritten. Der Dritte kann dann das empfangene digitale Dokument unter Verwendung eines Instant-Messaging-Dienstes mittels des Fernsignaturdienstes signieren, etwa indem er das empfangene digitale Dokument an einem ihm zu Signaturzwecken eindeutig zugeordneten individuellen serverseitigen Instant-Messaging-Account sendet und in Antwort das signierte digitale Dokument empfängt.

Gegenseitige Vereinbarungen und Absprachen können somit ohne schriftlichen Aufwand, schnell und in der Durchführung einfach Weise unter Verwendung eines Instant-Messaging-Dienstes getroffen werden.

Die Signaturerstellung erfolgt serverseitig beispielsweise unter Verwendung eines Hochsicherheitsmoduls (HSM). Unter einem "Hochsicherheitsmodul", welches auch als Hardware-Sicherheitsmodul oder Hardware Security Modul bezeichnet wird, wird hier ein Peripheriegerät, insbesondere ein (internes oder externes) Peripheriegerät, für die Speicherung eines kryptografischen Schlüssels und die Ausführung kryptografischer Operationen verstanden. Ein HSM ermöglicht es, die Vertrauenswürdigkeit und die Integrität von Daten und den damit verbundenen Informationen insbesondere in IT-Systemen sicherzustellen. Um die Vertrauenswürdigkeit zu gewährleisten, sollen die zum Einsatz kommenden kryptografischen Schlüssel sowohl softwaretechnisch als auch gegen physikalische Angriffe oder Seitenkanalangriffe geschützt werden.

Ein HSM sorgt für die Unzugänglichkeit des oder der darin gespeicherten privaten Schlüssel. Der Schutz des privaten Schlüssels kann so weit gehen, dass das HSM bei dem Versuch den privaten Schlüssel auszulesen, sich selbst zerstört oder zumindest derart zurücksetzt, dass der private Schlüssel unwiederbringlich gelöscht wird.

Beispielsweise wird die digitale Signatur zusammen mit dem digitalen Dokument als signiertes digitales Dokument über den serverseitigen Instant-Messaging-Account an den nutzerseitigen Instant-Messaging-Account gesendet. Somit empfängt der Nutzer über seinen nutzerseitigen Instant-Messaging-Account in Antwort auf die Signaturanfrage das digitale Dokument zusammen mit der erstellten digitalen Signatur, welche beispielsweise einen mit dem Signaturschlüssel des Nutzers verschlüsselten Hashwert des Dokuments umfasst. Die Kombination aus digitalem Dokument und digitaler Signatur stellt beispielsweise das signierte digitale Dokument dar.

Beispielsweise umfasst das Verfahren ferner ein Bereitstellen eines Zertifikats einer PKI, welches den Signaturprüfschlüssel umfasst. Die digitale Signatur wird beispielsweise zusammen mit dem Zertifikat über den serverseitigen Instant-Messaging-Account an den nutzerseitigen Instant-Messaging-Account gesendet. Das entsprechende Zertifikat kann der Nutzer Dritten beispielsweise zum Verifizieren der Signatur des digitalen Dokuments zur Verfügung stellen.

Das Zertifikat selbst kann beispielsweise mittels der PKI verifiziert werden. Das Zertifikat belegt beispielsweise, dass der von dem Zertifikat umfasste Signaturprüfschlüssel dem Nutzer zugeordnet ist. Wird eine Signatur also unter Verwendung des von dem Zertifikat umfassten Signaturprüfschlüssels erfolgreich verifiziert, bedeutet dies, dass es sich um valide Signatur des Nutzers handelt. Beispielsweise wird das entsprechende Zertifikat von dem Fernsignaturdienst unter Verwendung des Servers ausgestellt. Beispielsweise wird das entsprechende Zertifikat von einem Ausstellerdienst auf Anfrage des Servers des Fernsignaturdienstes ausgestellt.

Ein Instant-Messaging-Dienst ist ein Dienst, welcher ein Instant Messaging bzw. einen Nachrichtensofortversand zwischen zwei oder mehr Teilnehmern ermöglicht, welche mittels Textnachrichten miteinander kommunizieren. Dabei löst ein Absender mit einem Versendeden einer Nachricht eine Übermittlung im sogenanntes Push-Verfahren aus, sodass die Nachrichten möglichst unmittelbar beim Empfänger ankommen. Voraussetzung dafür, dass Nachrichten übertragen werden können, ist, dass die Teilnehmer jeweils über eine auf einem Computersystem installierte Instant-Messaging-Applikation mit einem Instant-Messaging-Account verfügen. Diese Instant-Messaging-Applikationen stehen über Netzwerk und/oder einen Server des Instant-Messaging-Dienstes miteinander in Kommunikationsverbindung. Zusätzlich zu Textnachrichten kann ein Instant-Messaging-Dienst ferner eine Übertragung von Dateien, wie etwa Text-, Bild-, Audio- und/oder Videodateien ermöglichen.

Beispielsweise verwendet der Nutzer ein mobiles tragbares Endgerät, auf welchem eine Applikation des Instant-Messaging-Dienstes installiert ist, mit welchem der Nutzer auf seinen nutzerseitigen Instant-Messaging-Account zugreifen kann. Die Verwendung eines mobilen tragbaren Endgeräts kann den Vorteil haben, dass eine Nutzung des Fernsignaturdienstes zum Signieren digitaler Dokumente durch den Nutzer über den Instant-Messaging-Dienst grundsätzlich überall und jederzeit ermöglicht werden kann. Insbesondere sind keine zusätzlichen technischen Geräte bzw. keine zusätzliche technische Infrastruktur notwendig. Vielmehr kann eine Signatur eines digitalen Dokuments durch den Nutzer unter Verwendung des mobilen tragbaren Endgeräts beispielsweise auch veranlasst werden, wenn der Nutzer etwa unterwegs ist.

Bei dem mobilen tragbaren Endgerät handelt es sich beispielsweise um ein Tablet, ein Laptop, ein Smartphone, eine Smartwatch, Smartglasses oder ein sonstiges mobiles tragbares Smart-Gerät. Unter einem Smart-Gerät wird hier ein Gerät mit einem Prozessor und einem Speicher zum Speichern von Programminstruktionen einer Applikation, wie etwa einer Applikation eines Instant-Messaging-Dienstes, zum Ausführen durch den Prozessor verstanden. Ferner verfügt das Smart-Gerät über eine Kommunikationsschnittstelle zum Herstellen einer kabellosen Kommunikationsverbindung in ein Netzwerk, über welches Nachrichten bzw. Messages an Instant-Messaging-Accounts des Instant-Messaging-Dienstes versandt werden können. Ein Smart-Geräte mit einer solchen Kommunikationsschnittstelle stellt beispielsweise ein Internet-Of-Things-Gerät (IoT-Gerät) dar, welches als ein Bestandteil des Internets der Dinge (Internet-Of-Things/loT) in eine Vernetzung bzw. ein Netzwerk von elektronischen Geräten über das Internet eingebunden werden kann.

Beispielsweise empfängt der Server des Fernsignaturdienstes die Registrierungsanfrage von dem Computersystem des Nutzers über eine verschlüsselte Kommunikationsverbindung zwischen dem Server des Fernsignaturdienstes und dem Computersystem des Nutzers. Beispielsweise ist die entsprechende Kommunikationsverbindung mittels einer Ende-zu-Ende-Verschlüsselung verschlüsselt.

Beispielsweise erfolgt eine Kommunikation über den Instant-Messaging-Dienst, d.h. zwischen dem serverseitigen Instant-Messaging-Account und dem nutzerseitigen Instant-Messaging-Account, in verschlüsselter Form. Beispielsweise ist die Kommunikation mittels einer Ende-zu-Ende-Verschlüsselung verschlüsselt.

Beispielsweise ist Voraussetzung für das Signieren des digitalen Dokuments ein Empfang einer zusätzlichen Signaturbestätigung des Nutzers. Durch die entsprechende zusätzliche Signaturbestätigung bestätigt der Nutzer zusätzlich, dass tatsächlich eine Signatur mit seinem Signaturschlüssel durch den Fernsignaturservice erstellt werden soll. Somit kann die Sicherheit des Verfahrens erhöht werden.

Beispielsweise umfasst das Verfahren ferner ein Senden einer ersten TAN an den Nutzer und ein Empfangen der ersten TAN als zusätzliche Signaturbestätigung des Nutzers von dem nutzerseitigen Instant-Messaging-Account über den serverseitigen Instant-Messaging-Account. Eine zusätzliche Signaturbestätigung des Nutzers kann somit beispielsweise mittels eines entsprechenden TAN bereitgestellt werden. Durch Empfang der zuvor an den Nutzer gesendeten ersten TAN kann ein Einverständnis des Nutzers mit der konkreten Verwendung des Signaturschlüssels zum Erstellen einer digitalen Signatur des digitalen Dokuments bestätigt bzw. verifiziert werden. Hierzu wird die empfangene TAN beispielsweise mit der zuvor gesendeten TAN verglichen. Stimmen beide TANs miteinander überein, gilt das Einverständnis des Nutzers als erfolgreich bestätigt bzw. verifiziert.

Bei einer Transaktionsnummer (TAN) handelt es sich um ein Einmalkennwort zur einmaligen Autorisierung eines Vorgangs durch einen die TAN verwendenden Nutzer. Ein Einmalkennwort, auch als Einmalpasswort bzw. OTP (One-Time Password) bezeichnet, ist ein Kennwort, welches beispielsweise eine einmalige Autorisierung ermöglicht. Dabei ist ein Einmalkennwort nur für eine einmalige Verwendung gültig und kann kein zweites Mal benutzt werden. Somit ist für jede Autorisierung bzw. jeden Autorisierungsvorgang jeweils ein neues Einmalkennwort notwendig. Da sie nur einmalig verwendet werden können, sind Einmalpasswörter sowohl sicher gegenüber passiven Angriffen, wie Mithören, als auch gegenüber Replay-Attacken.

Beispielsweise handelt es sich bei der ersten TAN um eine SMS-TAN, welche mittels einer SMS an die nutzerseitige erste Telefonnummer gesendet wird. Der Nutzer empfängt die TAN als SMS, beispielsweise auf einem als Telekommunikationsendgerät konfigurierten mobilen tragbaren Endgerät, welches unter der ersten Telefonnummer als einer Mobilfunknummer erreichbar ist, und sendet diese empfangene TAN zur zusätzlichen Bestätigung der Signaturanfrage beispielsweise von seinem nutzerseitigen Instant-Messaging-Account an den serverseitigen Instant-Messaging-Account unter Verwendung der dem Nutzer eindeutig zugeordneten serverseitige zweite Telefonnummer, d.h. an den für ihn serverseitig individuell eingerichteten Instant-Messaging-Account.

Unter einem "Telekommunikationsendgerät" wird hier ein tragbares, batteriegetriebenes Gerät mit einer Mobilfunk-Schnittstelle verstanden, insbesondere ein Mobiltelefon, ein Smartphone oder ein portabler Computer, wie zum Beispiel ein Laptop, Notebook oder Tablet-PC mit einer Mobilfunk-Schnittstelle. Das Telekommunikationsendgerät kann neben der Mobilfunk-Schnittstelle ein oder mehrere weitere Kommunikationsschnittstellen für die drahtlose Kommunikation aufweisen, wie zum Beispiel eine Bluetooth- und/oder eine WLAN-Schnittstelle, zur Kommunikation über ein Netzwerk, wie etwa das Internet.

Unter einem "Mobilfunknetz" wird hier insbesondere ein digitales zellulares Telekommunikations-Netzwerk verstanden, welches nach einem Mobilfunkstandard, wie z.B. einem GSM-, UMTS-, CDMA-, LTE, oder einem G5-Standard arbeitet. Über ein solches Mobilfunknetz kann beispielsweise auch eine Verbindung mit dem Internet hergestellt werden.

Beispielsweise wird die erste TAN mittels einer automatisch generierten Sprachnachricht an die nutzerseitige erste Telefonnummer gesendet. Der Nutzer empfängt die automatisch generierte Sprachnachricht mit der TAN, beispielsweise auf einem als Telekommunikationsendgerät konfigurierten mobilen tragbaren Endgerät, welches unter der ersten Telefonnummer als einer Mobilfunknummer erreichbar ist, und sendet diese empfangene TAN zur zusätzlichen Bestätigung der Signaturanfrage beispielsweise von seinem nutzerseitigen Instant-Messaging-Account an den serverseitigen Instant-Messaging-Account unter Verwendung der dem Nutzer eindeutig zugeordneten serverseitige zweite Telefonnummer, d.h. an den für ihn serverseitig individuell eingerichteten Instant-Messaging-Account.

Beispielsweise wird die erste TAN mittels einer E-Mail an eine E-Mailadresse des Nutzers gesendet. Der Nutzer empfängt die E-Mail mit der TAN und sendet diese empfangene TAN zur zusätzlichen Bestätigung der Signaturanfrage beispielsweise von seinem nutzerseitigen Instant-Messaging-Account an den serverseitigen Instant-Messaging-Account unter Verwendung der dem Nutzer eindeutig zugeordneten serverseitige zweite Telefonnummer, d.h. an den für ihn serverseitig individuell eingerichteten Instant-Messaging-Account. Beispielsweise besitzt der Nutzer mit einem mobilen tragbaren Endgerät Zugriff auf seine E-Mail-Adresse bzw. ein E-Mail-Konto für die entsprechende E-Mail-Adresse, ruft die E-Mail mit der TAN zum Weiterleiten der TAN auf.

Beispielsweise wird eine Bestätigungsanfrage als Push-Nachricht an eine auf einem mobilen tragbaren Endgerät des Nutzers implementierte Bestätigungsapplikation gesendet. Die zusätzliche Signaturbestätigung des Nutzers wird als Antwort auf die Bestätigungsanfrage von der Bestätigungsapplikation empfangen. Auf einen Empfang der Push-Nachricht durch die Bestätigungsapplikation wird dem Nutzer die Bestätigungsanfrage beispielsweise auf einem Display seines mobilen tragbaren Endgeräts mit einem Bestätigungsfeld angezeigt. Durch Anklicken des Bestätigungsfeldes kann der Nutzer die Bestätigungsanfrage beispielsweise bestätigen und das Senden der zusätzlichen Signaturbestätigung in Antwort auf die Bestätigungsanfrage an den Server des Fernsignaturdienstes unter Verwendung der Bestätigungsapplikation initiieren.

Beispielsweise wird das zu signierende digitale Dokument von dem nutzerseitigen Instant-Messaging-Account über den serverseitigen Instant-Messaging-Account empfangen. Dies bietet dem Nutzer beispielsweise die Möglichkeit, dass entsprechende digitale Dokument bzw. einen entsprechenden digitalen Datensatz selbst zu erstellen und zum Signieren unter Verwendung Instant-Messaging-Dienstes an den Server des Fernsignaturdienstes zu senden. Der Server kann dann beispielsweise einen Hashwert des über den serverseitigen Instant-Messaging-Account empfangenen digitalen Dokuments berechnen und zum Erstellen der digitalen Signatur verwenden.

Beispielsweise wird die Signaturanfrage in Form des zu signierenden digitalen Dokuments empfangen. Zum Zwecke einer Signaturerstellung kann der Nutzer beispielsweise einfach das zu signierende Dokument an den nutzerindividuellen serverseitigen Instant-Messaging-Account senden. Der Server des Fernsignaturdienstes ist beispielsweise dazu konfiguriert digitale Datensätze, welche er über den nutzerindividuellen serverseitigen Instant-Messaging-Account empfängt, mit dem Signaturschlüssel des Nutzers, dem die serverseitige zweite Telefonnummer des entsprechenden nutzerindividuellen serverseitigen Instant-Messaging-Account eindeutig zugeordnet ist, zu signieren.

Beispielsweise umfasst die Signaturanfrage das zu signierende digitale Dokument in Form eines Nachrichtentextes, einer Textdatei, einer Bilddatei, einer Audiodatei oder einer Videodatei. Zum Zwecke einer Signaturerstellung kann der Nutzer beispielsweise einfach den Nachrichtentext, die Textdatei, die Bilddatei, die Audiodatei oder die Videodatei an den nutzerindividuellen serverseitigen Instant-Messaging-Account senden. Der Server des Fernsignaturdienstes ist beispielsweise dazu konfiguriert digitale Datensätze, wie den Nachrichtentext, die Textdatei, die Bilddatei, die Audiodatei oder die Videodatei, welche er über den nutzerindividuellen serverseitigen Instant-Messaging-Account empfängt, mit dem Signaturschlüssel des Nutzers, dem die serverseitige zweite Telefonnummer des entsprechenden nutzerindividuellen serverseitigen Instant-Messaging-Account eindeutig zugeordnet ist, zu signieren.

Beispielsweise umfasst die Signaturanfrage einen Hashwert des zu signierenden Dokuments, welcher zum Erstellen der digitalen Signatur für das zu signierende digitale Dokument verwendet wird. Beispielsweise sendet der Nutzer zum Zwecke einer Signaturerstellung einfach einen Hashwert des zu signierenden Dokuments, etwa einen Nachrichtentext, eine Textdatei, eine Bilddatei, eine Audiodatei oder eine Videodatei an den nutzerindividuellen serverseitigen Instant-Messaging-Account senden. Hierzu berechnet beispielsweise der Nutzer, etwa unter Verwehung eines mobilen tragbaren Endgeräts, den entsprechenden Hashwert des zu signierenden Dokuments. Der Server des Fernsignaturdienstes ist beispielsweise dazu konfiguriert, Hashwerte, welche er über den nutzerindividuellen serverseitigen Instant-Messaging-Account empfängt, dazu zu verwenden mit dem Signaturschlüssel des Nutzers, dem die serverseitige zweite Telefonnummer des entsprechenden nutzerindividuellen serverseitigen Instant-Messaging-Account eindeutig zugeordnet ist, Signaturen zu erstellen. Eine daraus resultierende Signatur wird unter Verwendung des Instant-Messaging-Dienstes zurück an den nutzerseitigen Instant-Messaging-Account gesendet.

Beispielsweise umfasst die Signaturanfrage eine Angabe einer Netzwerkadresse, über welche das zu signierende digitale Dokument von dem Server ausgelesen werden kann. Das Verfahren umfasst ferner ein Auslesen des zu signierenden digitalen Dokuments unter Verwendung der Netzwerkadresse. Beispielsweise empfängt der Server mit der Signaturanfrage eine Angabe einer Netzwerkadresse, welche er zum Auslesen des zu signierenden digitalen Dokuments aus einem über das Netzwerk zugänglichen Speicherort. Beispielsweise wurde das zu signierende digitale Dokument von einem Dritten erstellt und dem Nutzer die entsprechende Netzwerkadresse zum Auslesen zur Verfügung gestellt. Beispielsweise wurde das zu signierende digitale Dokument von dem Nutzer erstellt und unter der entsprechenden Netzwerkadresse zur weiteren Nutzung durch sich selbst und/oder andere abgespeichert. Der Server kann das zu signierende digitale Dokument beispielsweise auslesen, einen Hashwert des zu signierenden digitalen Dokuments berechnen und den berechneten Hashwert zum Erstellen der digitalen Signatur verwenden.

Beispielsweise ist unter der Netzwerkadresse anstelle des vollständigen zu signierenden digitalen Dokuments nur ein Hashwert des zu signierenden digitalen Dokuments gespeichert, welcher unter Verwendung der empfangenen Netzwerkadresse ausgelesen werden kann.

Beispielsweise umfasst die Signaturanfrage ferner eine zweite TAN zum Nachweis einer Leseberechtigung zum Auslesen des zu signierenden digitalen Dokuments. Der Server verwendet beim Auslesen des zu signierenden digitalen Dokuments unter Verwendung der Netzwerkadresse die zweite TAN zum Nachweis der Leseberechtigung. Beispiele ermöglichen es das Auslesen des unter der Netzwerkadresse gespeicherten und zu signierenden digitalen Dokuments gegen unberechtigte Zugriffe zusätzlich abzusichern. Zum Auslesen des zu signierenden digitalen Dokuments reicht in diesem beispielsweise die Kenntnis der Netzwerkadresse noch nicht aus. Zusätzlich ist eine Kenntnis der zweiten TAN zum Nachweis einer Leseberechtigung zum Auslesen des zu signierenden digitalen Dokuments notwendig. Diese zweite TAN stellt beispielsweise ein Einmalkennwort dar, welches zu einem einmaligen Auslesen des zu signierenden digitalen Dokuments berechtigt.

Beispielsweise ist unter der Netzwerkadresse anstelle des vollständigen zu signierenden Dokuments nur ein Hashwert des zu signierenden digitalen Dokuments gespeichert, welcher unter Verwendung der zweiten TAN als Nachweis einer Leseberechtigung zum Auslesen des Hashwerts des zu signierenden Dokuments ausgelesen werden kann. Beispielsweise ist unter der Netzwerkadresse tatsächlich das vollständige zu signierende digitale Dokument gespeichert, jedoch berechtigt die zweite TAN lediglich zu einem Auslesen des Hashwerts des zu signierenden digitalen Dokuments. In diesem Fall wird auf einen Empfang einer Leseanfrage des Servers des Fernsignaturdienstes mit dem der entsprechenden Netzwerkadresse und der zweiten TAN durch einen das gespeicherte zu signierende digitale Dokument verwaltenden Server zunächst die zweite TAN geprüft. Handelt es sich bei der zweiten TAN um eine valide TAN, welche eine Leseberechtigung zum Auslesen des Hashwerts des zu signierenden Dokuments erfolgreich nachweist, berechnet der entsprechende Server beispielsweise den Hashwert des zu signierenden Dokuments und sendet diesen in Antwort auf die Leseanfrage an den Server des Fernsignaturdienstes zurück.

Beispielsweise umfasst das Registrieren des Nutzers ferner ein Identifizieren des Nutzers.

Beispielsweise umfasst das Identifizieren des Nutzers empfangen ein oder mehrerer aus einem ID-Token des Nutzers ausgelesene Attribute des Nutzers von einem ID-Providerdienst, welche mit einem Signaturschlüssel des ID-Providerdienst signiert sind.

Beispielsweise befindet sich der Nutzer im Besitz eines dem Nutzer zugeordneten ID-Tokens mit Identifikationsdaten in Form Attributen des Nutzers. Ein oder mehrere dieser Attribute des Nutzers werde beispielsweise von einem ID-Providerdienst, welcher eine Leseberechtigung zum Auslesen der entsprechenden Attribute besitzt ausgelesen und mit einem Signaturschlüssel eines ID-Providerdienst signiert. Mit der Signatur garantiert der ID-Providerdienst, dass es sich bei den entsprechenden Attributen um aus dem ID-Token des Nutzers ausgelesene Attribute handelt.

Beispielsweise umfasst das Identifizieren des Nutzers durch den Server des Fernsignaturdienstes ein Senden einer Attributanfrage zum Bereitstellen von ein oder mehreren Attributen des Nutzers von dem Server des Fernsignaturdienstes an einen ID-Providerserver und ein Empfangen der angefragten ein oder mehreren Attribute des Nutzers von dem ID-Providerserver in Antwort auf die Attributanfrage. Die Attribute des Nutzers liest der ID-Providerserver beispielsweise aus einem ID-Token des Nutzers aus. Beispielsweise sind die empfangenen Attribute des Nutzers mit einem Signaturschlüssel des ID-Providerservers signiert. Beispielsweise verifiziert der Server des Fernsignaturdienstes die Signatur der empfangenen Attribute unter Verwendung eines Signaturprüfschlüssels des ID-Providerservers.

Bei den entsprechenden Attributen des Nutzers handelt es sich beispielsweise um Angaben zu einem Namen, einem Geburtsdatum, einem Geburtsort und/oder einer Wohnanschrift des Nutzers, anhand derer der Nutzer identifiziert werden kann.

Die Attribute des Nutzers werden von dem ID-Providerserver empfangen, welcher mit seiner Signatur bestätigt, dass er die entsprechenden Attribute aus einem ID-Token ausgelesen hat und dass es sich bei den bereitgestellten Attributen um authentische Attribute handelt, welche mit den ausgelesenen Attributen übereinstimmen. Zum Auslesen von Attributen aus ID-Token besitzt der ID-Providerserver beispielsweise ein Berechtigungszertifikat, mit welchem er seine Berechtigung zum Auslesen der Attribute nachweisen kann. Bei dem Signaturschlüssel und dem Signaturprüfschlüssel des ID-Providerservers handelt es sich beispielsweise um einen privaten und einen öffentlichen kryptographischen Schlüssel eines dem ID-Providerserver bzw. einem ID-Providerdienst zugeordneten asymmetrischen Schlüsselpaars.

Unter einem "ID-Token" wird hier ein mobiles tragbares elektronisches Gerät verstanden, zum Beispiel eine Chipkarte oder ein elektronisches ID-Dokument mit einem Prozessor und einem Speicher, auf welchem personenbezogene Attribute eines Nutzers, d.h. Nutzerattribute, gespeichert sind. Unter einem elektronischen ID-Dokument wird insbesondere ein elektronisches Ausweis-, Wert- oder Sicherheitsdokument verstanden, insbesondere ein hoheitliches elektronisches Dokument, insbesondere ein papierbasiertes und/oder kunststoffbasiertes Dokument mit einem Prozessor und einem Speicher, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis. Insbesondere kann es sich bei dem ID-Token um ein Machine-Readable Travel Document, wie beispielsweise von der Internationalen Luftfahrtbehörde (ICAO) und/oder dem Bundesamt für Sicherheit in der Informationstechnik (BSI) standardisiert, handeln.

Beispielsweise wird der ID-Token in Form einer auf einem mobilen tragbaren Endgerät des Nutzers installierten ID-Applikation bereitgestellt. Die Attribute des Nutzers werden in diesem Fall beispielsweise von dem mobilen tragbaren Endgerät des Nutzers bereitgestellt.

Beispiele können den Vorteil haben, dass der ID-Token mit den Attributen des Nutzers durch das Endgerät bereitgestellt wird. Die Attribute sind beispielsweise unter Verwendung eines Sicherheitselements des Endgeräts geschützt auf dem Endgerät gespeichert. Beispielsweise sind die Attribute in einem geschützten Speicherbereich des Sicherheitselements gespeichert. Somit kann ein Auslesen der Attribute nur unter Verwendung des Sicherheitselements erfolgen. Beispielsweise sind die Attribute in verschlüsselter Form auf dem Endgerät gespeichert, wobei ein oder mehrere kryptographische Schlüssel zum Entschlüsseln der Attribute in einem geschützten Speicherbereich des Sicherheitselements gespeichert sind. Somit kann ein Auslesen der Attribute in Klartext nur unter Verwendung des Sicherheitselements erfolgen.

Ein Auslesen der Attribute, etwa zu Identifikationszwecke, ist daher nicht ohne weiteres möglich. Vielmehr sind die Attribute effektiv gegen ein unberechtigtes Auslesen geschützt. Beispielsweise ist zum Auslesen der Attribute aus dem Endgerät, d.h. zum Zugriff auf den geschützten Speicherbereich des Sicherheitselements mit den entsprechenden Attributen und/oder den ein oder mehreren kryptographischen Schlüsseln zum Entschlüsseln der verschlüsselt auf dem Endgerät gespeicherten Attribute, ein Berechtigungsnachweis unter Verwendung eines Berechtigungszertifikats notwendig. Beispielsweise besitzt der ID-Providerserver ein Berechtigungszertifikat, mit welchem er seine Berechtigung zum Auslesen der Attribute nachweisen kann. Beispielsweise ordnet das Berechtigungszertifikat dem ID-Providerserver einen öffentlichen kryptographischen Schlüssel eines asymmetrischen Schlüsselpaars zu. Der ID-Providerserver verfügt ferner über einen privaten kryptographischen Schlüssel des asymmetrischen Schlüsselpaars. Beispielsweise sendet der ID-Providerserver eine Leseanfrage zum Lesen der Attribute des Nutzers an das Endgerät bzw. die auf dem Endgerät implementierte ID-Applikation. Die Leseanfrage ist beispielsweise mit dem privaten kryptographischen Schlüssel des asymmetrischen Schlüsselpaars signiert. Das Endgerät bzw. die ID-Applikation prüft eine Validität der Signatur der Leseanfrage unter Verwendung des Berechtigungszertifikats bzw. des von dem Berechtigungszertifikat bereitgestellten öffentlichen kryptographischen Schlüssel. Auf eine erfolgreiche Validitätsprüfung hin gewährt das Endgerät bzw. das Sicherheitselement des Endgeräts dem ID-Providerserver einen Lesezugriff auf die Attribute.

Zum Auslesen der Attribute des Nutzers aus dem Endgerät wird beispielsweise eine verschlüsselte Kommunikationsverbindung zwischen dem Endgerät und dem ID-Providerserver aufgebaut. Beispielsweise ist die entsprechende Kommunikationsverbindung mittels einer Ende-zu-Ende-Verschlüsselung verschlüsselt.

Beispielsweise empfängt der Server des Fernsignaturdienstes von dem ID-Providerserver ausgelesenen Attribute des Nutzers über eine verschlüsselte Kommunikationsverbindung zwischen dem Server des Fernsignaturdienstes und dem ID-Providerserver. Beispielsweise ist die entsprechende Kommunikationsverbindung mittels einer Ende-zu-Ende-Verschlüsselung verschlüsselt.

Beispielsweise umfasst das Identifizieren des Nutzers ein Empfangen von ein oder mehreren Attributen des Nutzers, welche von einem Computersystem einer zum Identifizieren des Nutzers autorisierten Entität empfangen werden. Hierbei kann es sich beispielsweise um eine Identifikation des Nutzers in einer Filiale vor Ort oder remote, etwa über ein Video-Ident-Verfahren, handeln. Im Zuge der Identifikation des Nutzers in einer Filiale vor Ort oder remote werden die ein oder mehreren Attribute des Nutzers erfasst und verifiziert, etwa unter Verwendung deines ID-Dokuments des Nutzers. Die verifizierten ein oder mehreren Attribute des Nutzers werden unter Verwendung eines Computersystems einer zum Identifizieren des Nutzers autorisierten Entität signiert, beispielsweise unter Verwendung eines Signaturschlüssels der entsprechenden Entität, und an den Server des Fernsignaturdienstes gesendet.

Beispielsweise empfängt der Server des Fernsignaturdienstes von dem Computersystem der zum Identifizieren des Nutzers autorisierten Entität die verifizierten Attribute des Nutzers über eine verschlüsselte Kommunikationsverbindung zwischen dem Server des Fernsignaturdienstes und dem Computersystem der entsprechenden Entität. Beispielsweise ist die entsprechende Kommunikationsverbindung mittels einer Ende-zu-Ende-Verschlüsselung verschlüsselt.

Unter einem ID-Dokument wird insbesondere ein Ausweis-, Wert- oder Sicherheitsdokument verstanden, insbesondere ein hoheitliches elektronisches Dokument, insbesondere ein papierbasiertes und/oder kunststoffbasiertes Dokument, wie zum Beispiel ein Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis. Insbesondere kann es sich bei dem ID-Token um ein Machine-Readable Travel Document, wie beispielsweise von der Internationalen Luftfahrtbehörde (ICAO) und/oder dem Bundesamt für Sicherheit in der Informationstechnik (BSI) standardisiert, handeln.

Beispielsweise umfasst das Verfahren ferner ein Eintragen der erstellten Signatur in eine Blockchain. Beispielsweise wird zusammen mit der Signatur eine Dokumenten-ID des digitalen Dokuments in die Blockchain zum Identifizieren der Signatur eingetragen. Beispielsweise handelt es sich bei der Dokumenten-ID um einen Hashwert des Dokuments. Beispielsweise wird zusammen mit der Signatur der Signaturprüfschlüssel in die Blockchain eingetragen.

Beispielsweise handelt es sich bei dem Server des Fernsignaturdienstes um einen Blockchain-Server, welcher eine Blockchain verwaltet. Beispielsweise wird ein zusätzlicher Blockchain-Server bereitgestellt, welcher eine Blockchain verwaltet und an den der Server des Fernsignaturdienstes Daten zum Speichern in der Blockchain senden kann. Das Eintragen der erstellten Signatur in die Blockchain erfolgt durch den Blockchain-Server in einer von dem Blockchain-Server verwalteten oder zumindest mitverwalteten Blockchain.

Ausführungsformen können den Vorteil haben, dass eine Blockchain eine effektive Möglichkeit zu einem manipulationssicheren Speichern der erstellten Signatur bereitstellt.

Eine Blockchain bezeichnet eine kontinuierlich erweiterbare Liste von Datensätzen in Form einzelner Blöcke. Neue Blöcke werden nach einem festgelegten Verfahren erstellt und mittels kryptographischer Verfahren an eine bestehende Kette aus Blöcken angehängt. Dabei enthält der neue Block jeweils einen kryptographisch sicheren Hashwert, d.h. Streuwert, zumindest der Daten des unmittelbar vorhergehenden Blocks in der Blockchain. Soll ein Block der Blockchain geändert bzw. manipuliert werden, so müssten hierfür auch die in allen nachfolgenden Blöcken jeweils gespeicherten Hashwerte, d.h. alle nachfolgenden Blöcke manipuliert werden. Somit kann durch das kryptographische Verkettungsverfahren, welches die Verwendung der Hashfunktion umfasst, sichergestellt werden, dass die Blockchain nicht nachträglich geändert werden kann. Die resultierende kryptographisch verknüpfte Kette der Blöcke ist somit unveränderbar, fälschungs- und manipulationssicher.

Bei der Blockchain kann es sich beispielsweise um eine öffentliche Blockchain, eine konsortiale Blockchain oder eine private Blockchain handeln. Eine öffentliche Blockchain ist öffentlich zugänglich und wird im Allgemeinen auf einem öffentlichen Netzwerk betrieben. Eine konsortiale Blockchain ist im Gegensatz dazu nur ausgewählten Entitäten zugänglich und wird im Allgemeinen auf einem Netzwerk betrieben, an welchem ausschließlich diese Entitäten beteiligt sind. Eine private Blockchain ist schließlich nur für eine Entität privat zugänglich und wird im Allgemeinen auf einem privaten Netzwerk der entsprechenden Entität betrieben. Neue Blöcke der Blockchain werden beispielsweise unter Verwendung eines Konsensverfahrens erstellt. Dieses Konsensverfahrens kann beispielsweise eines der folgenden Verfahren umfassen: einen Proof of Work, einen Proof of Stake, oder einen Proof of Authority.

Beispielsweise umfasst das Verfahren zum Speichern der erstellten Signatur in der Blockchain im Falle eines zusätzlich bereitgestellten Blockchain-Servers durch den Blockchain-Server ein Bereitstellen der Blockchain bzw. einer Kopie der Blockchain, ein Empfangen einer Eintragungsanfrage zur Eintragung der erstellten Signatur in die Blockchain, ein Erstellen eines zusätzlichen Blocks für die Blockchain, in welchen die empfangene Signatur eingetragen wird, und Hinzufügen des zusätzlichen Blocks mit der empfangenen Signatur zu der Blockchain.

Beispielsweise ist die Eintragungsanfrage zur Eintragung der erstellten Signatur von dem Server des Fernsignaturdienstes mit einem Signaturschlüssel des Fernsignaturdienstes signiert. Beispielsweise umfasst das Verfahren zum Speichern der erstellten Signatur in der Blockchain ferner ein Verifizieren der Signatur der Eintragungsanfrage unter Verwendung eines dem Signaturschlüssel des Fernsignaturdienstes zugeordneten Signaturprüfschlüssels. Beispielsweise ist ein erfolgreiches Verifizieren der Signatur der Eintragungsanfrage unter Verwendung des Signaturprüfschlüssels des Fernsignaturdienstes eine Voraussetzung für das Eintragen der erstellten Signatur des digitalen Dokuments in den zusätzlichen Block der Blockchain. Bei dem Signaturschlüssel des Fernsignaturdienstes handelt es sich beispielsweise um einen privaten kryptographischen Schlüssel des Fernsignaturdienstes, welcher zusammen mit einem öffentlichen kryptographischen Schlüssel des Fernsignaturdienstes ein dem Fernsignaturdienst zugeordnetes asymmetrisches kryptographisches Schlüsselpaar bildet. Dabei dient der öffentliche kryptographische Schlüssel beispielsweise als Signaturprüfschlüssel zum Prüfen von Signaturen, welche mit dem Signaturschlüssel des Fernsignaturdienstes erstellt wurden.

Beispielsweise umfasst das Verfahren zum Speichern der erstellten Signatur in der Blockchain im Falle einer von dem Server des Fernsignaturdienstes verwalteten Blockchain ein Bereitstellen der Blockchain bzw. einer Kopie der Blockchain, ein Erstellen eines zusätzlichen Blocks für die Blockchain, in welchen die erstellte Signatur eingetragen wird, und ein Hinzufügen des zusätzlichen Blocks mit der erstellten Signatur zu der Blockchain.

In einem weiteren Aspekt ist ein Server offenbart zum Bereitstellen eines Fernsignaturdienstes unter Verwendung eines Instant-Messaging-Dienstes. Der Server umfasst einen Prozessor und einen Speicher mit Programminstruktionen. Ferner umfasst der Server eine Kommunikationsschnittstelle zur Kommunikation über ein Netzwerk.

Ein Ausführen der Programminstruktionen durch den Prozessor veranlasst den Prozessor dazu, den Server zu steuern zum:
- Registrieren eines Nutzers zur Verwendung des Fernsignaturdienstes, wobei das Registrieren umfasst:
   ∘ Empfangen einer Registrierungsanfrage zum Registrieren des Nutzers von einem Computersystem des Nutzers über ein Netzwerk, wobei die Registrierungsanfrage eine nutzerseitige erste Telefonnummer des Nutzers umfasst,
   ∘ Erzeugen und serverseitiges Speichern eines dem registrierten Nutzer eindeutig zugeordneten asymmetrischen kryptographischen Schlüsselpaars, wobei das asymmetrische kryptographische Schlüsselpaar einen privaten kryptographischen Schlüssel als Signaturschlüssel zum Erstellen von digitalen Signaturen des Nutzers und einen öffentlichen kryptographischen Schlüssel als Signaturprüfschlüssel zum Prüfen von mit dem Signaturschlüssel erstellten digitalen Signaturen umfasst,
   ∘ Erzeugen einer dem registrierten Nutzer eindeutig zugeordneten serverseitige zweite Telefonnummer,
   ∘ Einrichten eines serverseitigen Instant-Messaging-Accounts bei dem Instant-Messaging-Dienst unter Verwendung der dem Nutzer eindeutig zugeordneten serverseitigen zweiten Telefonnummer,
   ∘ Senden einer Kontaktanfrage von dem serverseitigen Instant-Messaging-Account an einen nutzerseitigen Instant-Messaging-Account unter Verwendung der nutzerseitigen ersten Telefonnummer,
   ∘ Empfangen einer Kontaktbestätigung von dem nutzerseitigen Instant-Messaging-Account als Bestätigung eines erfolgreichen Einrichtens des Fernsignaturdienstes über den Instant-Messaging-Dienst,
- Empfangen einer Signaturanfrage zum Erstellen einer digitalen Signatur für ein digitales Dokument mit dem Signaturschlüssel vom dem nutzerseitigen Instant-Messaging-Account über den serverseitigen Instant-Messaging-Account,
- Erstellen einer digitalen Signatur für das zu signierende digitale Dokument unter Verwendung des Signaturschlüssels,
- Senden der digitalen Signatur über den serverseitigen Instant-Messaging-Account an den nutzerseitigen Instant-Messaging-Account.

Der Server ist beispielsweise dazu konfiguriert jedes der zuvor beschriebenen Beispiele des Verfahrens zum Bereitstellen des Fernsignaturdienstes unter Verwendung des Instant-Messaging-Dienstes auszuführen

In einem weiteren Aspekt ist System offenbart, welches einen Server zum Bereitstellen eines Fernsignaturdienstes unter Verwendung eines Instant-Messaging-Dienstes nach einem der zuvor beschriebenen Beispiele sowie das mobile tragbare Endgerät des Nutzers umfasst.

Das System ist beispielsweise dazu konfiguriert jedes der zuvor beschriebenen Beispiele des Verfahrens zum Bereitstellen des Fernsignaturdienstes unter Verwendung des Instant-Messaging-Dienstes auszuführen.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Ein Prozessor umfasst beispielsweise ein Rechenwerk, ein Steuerwerk, Register und Datenleitungen zur Kommunikation mit anderen Komponenten. Insbesondere wird unter einem "Prozessor" ein Mikroprozessor oder ein Mikroprozessorsystem aus mehreren Prozessorkernen und/oder mehreren Mikroprozessoren verstanden.

Unter einem Sicherheitselement wird ein gesichertes Element eines mobilen Endgeräts verstanden, welches kryptographische Mittel bereitstellt. Diese kryptographischen Mittel sind gegen Manipulation geschützt und beispielsweise über kryptographische Schlüssel nur für autorisierte Dienste und Anwendungen zugänglich. Insbesondere können die kryptographischen Mittel beispielsweise nur durch autorisierte Dienste und Anwendungen in das Sicherheitselement eingebracht, ergänzt, verändert und/oder gelöscht werden. Ein Sicherheitselement bietet mithin eine manipulationssichere Plattform, beispielsweise implementiert in Form eines sicheren Ein-Chip-Mikrocontroller, auf welcher Applets und/oder vertrauliche und/oder kryptographische Daten gemäß vordefinierten Regeln und Sicherheitsanforderungen von zuverlässig identifizierten vertrauenswürdigen Instanzen gespeichert und so berechtigten Applikationen und/oder Betriebssystemen zur Verfügung gestellt werden können. Ein Sicherheitselement kann eingebettete oder integriert sein, beispielsweise zerstörungsfrei lösbar oder fest verbunden, d.h. nicht zerstörungsfrei lösbar, eingebracht sein. Ein Sicherheitselement kann beispielsweise in Form eines Secure Element (SE) implementiert sein. Das Sicherheitselement kann beispielweise eine SIM, UICC, SmartMicroSD, Smartcard, eSE, eSIM oder eUICC umfassen. Beispielsweise sind auf einem Sicherheitselement kryptographische Schlüssel gespeichert, d.h. das Sicherheitselement umfasst einen Datentresor für kryptographische Schlüssel bzw. einen "Key Store". Ein solcher Key-Store bzw. Sicherheitselement kann auch als Teil des Hauptprozessors implementiert sein, beispielsweise in einer TEE ("Trusted Excecution Environment"). Beispielsweise kann das Sicherheitselement unter Verwendung einer TEE implementiert sein. Sicherheitselemente sind beispielsweise als Hardware und/oder Firmware implementiert. Nach Ausführungsformen können Sicherheitselemente bzw. Key Stores auch als Software implementiert sein.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten, insbesondere von statischen kryptographischen Schlüsseln, Attributen oder Kennungen, verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen Speicher" wird hier ein elektronischer Speicher zur vorübergehenden Speicherung von Daten verstanden, welcher dadurch gekennzeichnet ist, dass gespeicherte Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor des entsprechenden elektronischen Geräts möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentifizierung und/oder eine erfolgreiche Berechtigungsprüfung einer Zugriffsanfrage, handeln.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Eine Kommunikationsschnittstelle kann beispielsweise eine Kommunikation über ein Netzwerk ermöglichen. Je nach Konfiguration kann eine Kommunikationsschnittstelle beispielsweise eine kabellose Kommunikation nach einem Mobilfunkstandard, Bluetooth-, RFID-, WiFi und/oder NFC-Standard bereitstellen. Je nach Konfiguration kann eine Kommunikationsschnittstelle beispielsweise eine kabelbasierte Kommunikation bereitstellen.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein digitales privates Netzwerk (Virtual Private Network - VPN). Beispielsweise kann ein Gerät eine Standardfunkschnittstelle zur Anbindung an ein WLAN aufweisen. Ferner kann es sich um ein öffentliches Netzwerk, wie beispielsweise das Internet handeln. Je nach Ausführungsform kann eine Netzwerkverbindung auch über ein Mobilfunknetz hergestellt werden.

Bei einem verschlüsselten Kommunikationskanal handelt es sich beispielsweise um verschlüsselte Ende-zu-Ende-Verbindungen. Unter einer "verschlüsselten Ende-zu-Ende-Verbindung" bzw. einem "verschlüsselten Ende-zu-Ende-Kommunikationskanal" wird hier eine Verbindung zwischen einem Sender und einem Empfänger mit einer Ende-zu-Ende-Verschlüsselung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, so dass Zwischenstationen aufgrund der Verschlüsselung keine Kenntnis vom Inhalt der übertragenen Daten erlangen können. Die Verbindung wird durch die Verschlüsselung kryptographisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsselung beruht beispielsweise auf zwei symmetrischen kryptographischen Schlüsseln, wobei ein erster der symmetrischen Schlüssel zum Verschlüsseln von Nachrichten und ein zweiter der symmetrischen Schlüssel zum Authentifizieren des Senders der Nachricht, etwa mittels Message Authentication Code (MAC)-Algorithmen, dient. Beispielsweise werden für einen verschlüsselten Kommunikationskanal im Zuge des Aufbaus ephemere Schlüssel zur Verschlüsselung ausgehandelt, welche mit einer Beendigung des Kommunikationskanals ihre Gültigkeit verlieren. Eine Verwendung unterschiedlicher ephemerer Schlüssel für unterschiedliche Kommunikationskanäle ermöglicht es eine Mehrzahl von Kommunikationskanälen parallel zueinander zu betreiben.

Ein verschlüsselter Kommunikationskanal kann beispielsweise unter Verwendung des Transport Layer Security (TLS) Protokolls aufgebaut werden, beispielsweise als Teil des Hypertext Transfer Protocol Secure (HTTPS) Protokolls.

Asymmetrische Schlüsselpaare werden für eine Vielzahl von Kryptosystemen eingesetzt und spielen bei der sicheren Übertragung elektronischer Daten eine wichtige Rolle. Ein asymmetrisches Schlüsselpaar besteht aus einem öffentlichen kryptographischen Schlüssel, welcher zur Ver- und/oder Entschlüsselung von Daten verwendet wird und an Dritte, beispielsweise an einen Sender oder Empfänger von Daten, weitergegeben werden darf, sowie einem privaten kryptographischen Schlüssel, welcher zur Ver- und/oder Entschlüsselung, aber auch zur Signatur von Daten verwendet wird und im Regelfall geheim gehalten werden muss. Der öffentliche Schlüssel ermöglicht es jedermann Daten für den Inhaber des privaten kryptographischen Schlüssels zu verschlüsseln und/oder mit dem privaten kryptographischen Schlüssel erstellte digitale Signaturen zu prüfen. Ein privater Schlüssel ermöglicht es seinem Inhaber mit dem öffentlichen kryptographischen Schlüssel verschlüsselte Daten zu entschlüsseln und/oder digitale Signaturen von Daten zu erstellen.

Eine digitale Signatur von Daten umfasst beispielsweise ein Bilden eines Prüfwerts der Daten, wie etwa eines Hashwerts, welcher mit einem als Signaturschlüssel verwendeten privaten kryptographischen Schlüssel eines asymmetrischen Schlüsselpaars verschlüsselt wird. Im Falle einer Signatur kennt nur der Signierende den zum Erstellen der Signatur verwendeten privaten kryptographischen Schlüssel, d.h. Signaturschlüssel, des verwendeten asymmetrischen Schlüsselpaars. Der Signaturempfänger verfügt lediglich über den öffentlichen kryptographischen Schlüssel, d.h. Signaturprüfschlüssel, des verwendeten asymmetrischen Schlüsselpaars. Der Signaturempfänger kann die Signatur mithin prüfen, aber nicht selbst berechnen. Für eine Signaturprüfung berechnet der Signaturempfänger beispielsweise den Prüfwert der signierten Daten und vergleicht diesen mit dem Ergebnis einer Entschlüsselung der Signatur unter Verwendung des Signaturprüfschlüssels. Stimmt der berechnete Hashwert mit dem Ergebnis der Entschlüsselung überein ist die Signatur korrekt. Wird zudem die Authentizität des Signaturprüfschlüssels, etwa durch ein Zertifikat, insbesondere ein PKI-Zertifikat, bestätigt, ist die Signatur valide.

Unter einem "Zertifikat" wird hier ein digitales Zertifikat verstanden, welches auch als Public-Key-Zertifikat (PKI-Zertifikat) bezeichnet wird. Bei einem Zertifikat handelt es sich um strukturierte Daten, die dazu dienen, einen öffentlichen kryptographischen Schlüssel eines asymmetrischen Kryptosystems einer Identität, wie zum Beispiel einer Person, Institution oder einer Vorrichtung, zuzuordnen. Zur kryptographischen Sicherung und zum Nachweis der Authentizität der Daten des Zertifikates, sind diese von einem Zertifikatsaussteller signiert. Durch PKI-Zertifikate, welche auf asymmetrischen Schlüsselpaaren basieren, und bis auf ein Root- bzw. Wurzelzertifikat jeweils von einem Zertifikatsaussteller mit einem Signaturschlüssel signiert sind, dessen zugehöriger Signaturprüfschlüssel dem Zertifikatsaussteller durch ein PKI-Zertifikat des entsprechenden Zertifikatausstellers zugeordnet ist, wird eine so genannte Public Key Infrastructure (PKI) realisiert. Beispielsweise kann das Zertifikat dem Standard X.509 oder einem anderen Standard entsprechen. Beispielsweise handelt es sich bei dem Zertifikat um ein Card Verifiable Certificate (CVC). Ein Berechtigungszertifikat umfasst strukturierte Daten, welche zusätzlich Rechte der Identität definieren.

Die PKI stellt ein System zum Ausstellen, Verteilen und Prüfen digitaler Zertifikate bereit. Ein digitales Zertifikat kann in einem asymmetrischen Kryptosystem die Authentizität eines öffentlichen kryptographischen Schlüssels und seinen zulässigen Anwendungs- und Geltungsbereich bestätigen. Das digitale Zertifikat ist selbst durch eine digitale Signatur geschützt, deren Echtheit bzw. Authentizität mit dem öffentlichen kryptographischen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen kryptographischen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des dadurch zertifizierten Schlüssels, müssen sich die Teilnehmer der PKI beispielsweise ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht. Bei der PKI handelt es sich beispielsweise um eine hierarchische PKl, bei welcher sämtliche Validierungs- bzw. Zertifizierungspfad zu demselben Wurzelzertifikat führen.

Digitale Zertifikate werden beispielsweise durch eine unabhängige, glaubwürdige Instanz (Zertifizierungsdienstanbieter/ZDA oder Vertrauensdienstanbieter/VDA), d.h. die das Zertifikat zuteilende Zertifizierungsstelle, bestätigen. Zertifikate können einem breiten Personenkreis zur Verfügung gestellt werden, um diesem eine Prüfung elektronischer Signaturen auf Authentizität und Gültigkeit zu ermöglichen. Ein Zertifikat kann einer elektronischen Signatur zugeordnet sein und einen Signaturprüfschlüssel in Form des öffentlichen kryptographischen Schlüssels bereitstellen, wenn der zu dem Signaturprüfschlüssel gehörende private Schlüssel als Signaturschlüssel verwendet wurde. Dadurch, dass ein ZDA /VDA ein Zertifikat in Assoziation mit einem öffentlichen kryptographischen Schlüssel der Allgemeinheit zur Verfügung stellt, ermöglicht sie es den Nutzern asymmetrischer Kryptosysteme den öffentlichen kryptographischen Schlüssel einer Identität, beispielsweise einer Person, einer Organisation, oder Computersystem, zuzuordnen.

Bei einem Computer bzw. einem Computersystem kann es sich zum Beispiel um einen stationären Computer, wie etwa einen Personal Computer (PC), Serviceterminal oder einen Server, oder um einen mobilen tragbaren Computer, wie etwa einen Laptop, ein Tablet, ein Smartphone oder einen andern Smart Device, handeln. Der Computer kann eine Schnittstelle zur Verbindung mit dem Netzwerk umfassen, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Es versteht sich, dass eine oder mehrere der vorgenannten Ausführungsformen miteinander kombiniert werden können, solange sich die Ausführungsformen nicht gegenseitig ausschließen.

### KURZE BESCHREIBUNG DER ZEICHNUNGEN

Im Folgenden werden Beispiele anhand der Zeichnungen näher erläutert. Es zeigen:
Figur 1 ein Flussdiagramm eines exemplarischen Verfahrens zum Registrieren eines Nutzers für eine Nutzung eines Fernsignaturdienstes unter Verwendung eines Instant-Messaging-Dienstes,
Figur 2 ein Flussdiagramm eines exemplarischen Verfahrens zur Nutzung eines Fernsignaturdienstes unter Verwendung eines Instant-Messaging-Dienstes,
Figur 3 ein Flussdiagramm eines exemplarischen Verfahrens zur Nutzung eines Fernsignaturdienstes unter Verwendung eines Instant-Messaging-Dienstes,
Figur 4 ein Flussdiagramm eines exemplarischen Verfahrens zur Nutzung eines Fernsignaturdienstes unter Verwendung eines Instant-Messaging-Dienstes,
Figur 5 ein Flussdiagramm eines exemplarischen Verfahrens zur Nutzung eines Fernsignaturdienstes unter Verwendung eines Instant-Messaging-Dienstes,
Figur 6 ein Flussdiagramm eines exemplarischen Verfahrens zur Nutzung eines Fernsignaturdienstes unter Verwendung eines Instant-Messaging-Dienstes,
Figur 7 ein Flussdiagramm eines exemplarischen Verfahrens zum Identifizieren eines Nutzers unter Verwendung eines ID-Tokens,
Figur 8 ein Flussdiagramm eines exemplarischen Verfahrens zum Identifizieren eines Nutzers unter Verwendung eines ID-Tokens,
Figur 9 ein Flussdiagramm eines exemplarischen Verfahrens zum Eintragen einer von einem Fernsignaturdienst erstellten Signatur in eine Blockchain,
Figur 10 ein Flussdiagramm eines exemplarischen Verfahrens zum Eintragen einer von einem Fernsignaturdienst erstellten Signatur in eine Blockchain,
Figur 11 ein Blockdiagramm eines exemplarischen Servers eines Fernsignaturdienstes,
Figur 12 ein Blockdiagramm eines exemplarischen Systems zum Bereitstellen eines Fernsignaturdienstes unter Verwendung eines Instant-Messaging-Dienstes,
Figur 13 ein Blockdiagramm eines exemplarischen Systems zum Registrieren für eine Nutzung eines Fernsignaturdienstes unter Verwendung eines Instant-Messaging-Dienstes,
Figur 14 ein Blockdiagramm eines exemplarischen Systems zum Registrieren für eine Nutzung eines Fernsignaturdienstes unter Verwendung eines Instant-Messaging-Dienstes, und
Figur 15 ein Blockdiagramm eines exemplarischen Systems zum Eintragen einer von einem Fernsignaturdienstes unter Verwendung eines Instant-Messaging-Dienstes erstellten Signatur in eine Blockchain.

### DETAILLIERTE BESCHREIBUNG

Im Folgenden werden einander ähnliche Elemente mit den gleichen Bezugszeichen gekennzeichnet.

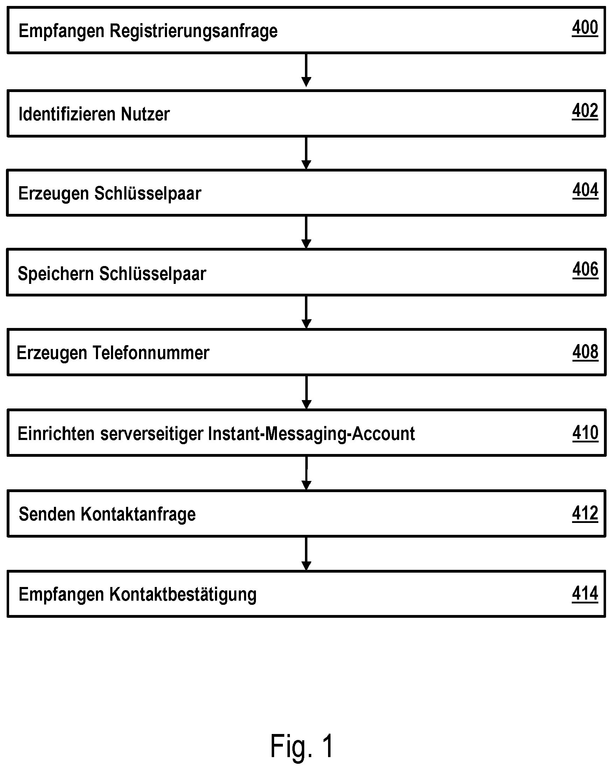

Figur 1 zeigt ein exemplarisches Registrieren eines Nutzers zur Verwendung eines Fernsignaturdienstes im Zuge eines Verfahrens zum Bereitstellen des Fernsignaturdienstes unter Verwendung eines Instant-Messaging-Dienstes. In Block 400 empfängt ein Server des Fernsignaturdienstes eine Registrierungsanfrage zum Registrieren des Nutzers von einem Computersystem des Nutzers über ein Netzwerk. Die Registrierungsanfrage umfasst eine nutzerseitige erste Telefonnummer des Nutzers.

In Block 402 erzeugen der Server des Fernsignaturdienstes ein dem registrierten Nutzer eindeutig zugeordnetes asymmetrisches kryptographisches Schlüsselpaar. Das asymmetrische kryptographische Schlüsselpaar umfasst einen privaten kryptographischen Schlüssel als Signaturschlüssel zum Erstellen von digitalen Signaturen des Nutzers und einen öffentlichen kryptographischen Schlüssel als Signaturprüfschlüssel zum Prüfen von mit dem Signaturschlüssel erstellten digitalen Signaturen. In Block 406 speichert der Server des Fernsignaturdienstes das erzeugte Schlüsselpaar serverseitig.

In Block 408 erzeugt der Server des Fernsignaturdienstes eine dem registrierten Nutzer eindeutig zugeordnete serverseitige zweite Telefonnummer. In Block 410 richtet der Server des Fernsignaturdienstes einen serverseitigen Instant-Messaging-Account bei dem Instant-Messaging-Dienst unter Verwendung der dem Nutzer eindeutig zugeordneten serverseitigen zweiten Telefonnummer ein. In Block 412 sendet der Server des Fernsignaturdienstes eine Kontaktanfrage von dem serverseitigen Instant-Messaging-Account an einen nutzerseitigen Instant-Messaging-Account unter Verwendung der nutzerseitigen ersten Telefonnummer.

In Block 414 empfängt der Server des Fernsignaturdienstes eine Kontaktbestätigung von dem nutzerseitigen Instant-Messaging-Account als Bestätigung eines erfolgreichen Einrichtens des Fernsignaturdienstes über den Instant-Messaging-Dienst.

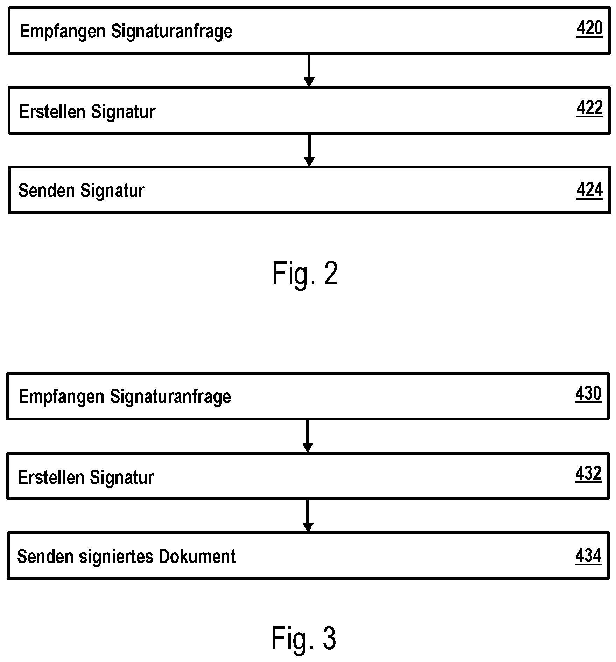

Figur 2 zeigt ein exemplarisches Nutzen eines Fernsignaturdienstes unter Verwendung eines Instant-Messaging-Dienstes im Zuge eines Verfahrens zum Bereitstellen des Fernsignaturdienstes unter Verwendung des Instant-Messaging-Dienstes. In Block 420 empfängt ein Server des Fernsignaturdienstes eine Signaturanfrage zum Erstellen einer digitalen Signatur für ein digitales Dokument mit dem Signaturschlüssel vom dem nutzerseitigen Instant-Messaging-Account über den serverseitigen Instant-Messaging-Account. In Block 422 erstellt der Server des Fernsignaturdienstes eine digitale Signatur für das zu signierende digitale Dokument unter Verwendung eines dem Nutzer des nutzerseitigen Instant-Messaging-Accounts eindeutigen zugeordneten Signaturschlüssels, welcher serverseitig gespeichert ist. In Block 424 sendet der Server des Fernsignaturdienstes die digitale Signatur über den serverseitigen Instant-Messaging-Account an den nutzerseitigen Instant-Messaging-Account. Beispielsweise umfasst die in Block 420 empfangene Signaturanfrage einen Hashwert des zu signierenden digitalen Dokuments, welcher in Block 422 von dem Server des Fernsignaturdienstes zum Erstellen der digitalen Signatur verwendet wird.

Figur 3 zeigt ein exemplarisches Nutzen eines Fernsignaturdienstes unter Verwendung eines Instant-Messaging-Dienstes im Zuge eines Verfahrens zum Bereitstellen des Fernsignaturdienstes unter Verwendung des Instant-Messaging-Dienstes. In Block 430 empfängt ein Server des Fernsignaturdienstes eine Signaturanfrage zum Erstellen einer digitalen Signatur für ein digitales Dokument mit dem Signaturschlüssel vom dem nutzerseitigen Instant-Messaging-Account über den serverseitigen Instant-Messaging-Account. In Block 432 erstellt der Server des Fernsignaturdienstes eine digitale Signatur für das zu signierende digitale Dokument unter Verwendung eines dem Nutzer des nutzerseitigen Instant-Messaging-Accounts eindeutigen zugeordneten Signaturschlüssels, welcher serverseitig gespeichert ist. In Block 434 sendet der Server des Fernsignaturdienstes das signierte digitale Dokument mit der erstellten digitalen Signatur über den serverseitigen Instant-Messaging-Account an den nutzerseitigen Instant-Messaging-Account. Beispielsweise umfasst die in Block 430 empfangene Signaturanfrage das zu signierende digitale Dokument, welches in Block 432 von dem Server des Fernsignaturdienstes zum Erstellen der digitalen Signatur verwendet wird. Beispielsweise wird die Signaturanfrage von dem Server des Fernsignaturdienstes in Form des zu signierenden digitalen Dokuments empfangen. Beispielsweise umfasst die Signaturanfrage das zu signierende digitale Dokument in Form eines Nachrichtentextes, einer Textdatei, einer Bilddatei, einer Audiodatei oder einer Videodatei. Beispielsweise berechnet der Server des Fernsignaturdienstes einen Hashwert des zu signierenden digitalen Dokuments, welcher zum Erstellen der digitalen Signatur verwendet wird.

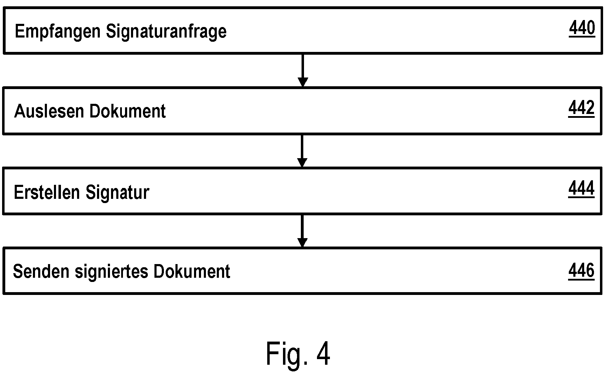

Figur 4 zeigt ein exemplarisches Nutzen eines Fernsignaturdienstes unter Verwendung eines Instant-Messaging-Dienstes im Zuge eines Verfahrens zum Bereitstellen des Fernsignaturdienstes unter Verwendung des Instant-Messaging-Dienstes. In Block 440 empfängt ein Server des Fernsignaturdienstes eine Signaturanfrage zum Erstellen einer digitalen Signatur für ein digitales Dokument mit dem Signaturschlüssel vom dem nutzerseitigen Instant-Messaging-Account über den serverseitigen Instant-Messaging-Account. Die Signaturanfrage umfasst eine Angabe einer Netzwerkadresse, über welche das zu signierende digitale Dokument von dem Server ausgelesen werden kann. In Block 442 liest der Server des Fernsignaturdienstes das zu signierende digitale Dokument unter Verwendung der empfangenen Netzwerkadresse aus. In Block 444 erstellt der Server des Fernsignaturdienstes eine digitale Signatur für das zu signierende digitale Dokument unter Verwendung eines dem Nutzer des nutzerseitigen Instant-Messaging-Accounts eindeutigen zugeordneten Signaturschlüssels, welcher serverseitig gespeichert ist. In Block 446 sendet der Server des Fernsignaturdienstes das signierte digitale Dokument mit der erstellten digitalen Signatur über den serverseitigen Instant-Messaging-Account an den nutzerseitigen Instant-Messaging-Account.

Beispielsweise ist zum Auslesen des zu signierenden Dokuments ferner eine TAN zum Nachweis einer Leseberechtigung notwendig. Beispielsweise empfängt der Server des Fernsignaturdienstes die TAN zum Nachweis einer Leseberechtigung zum Auslesen des zu signierenden digitalen Dokuments zusammen mit der Netzwerkadresse in Block 440 als Bestandteil der Signaturanfrage und verwendet die empfangenen TAN beim Auslesen des zu signierenden digitalen Dokuments in Block 442 zum Nachweis der Leseberechtigung.

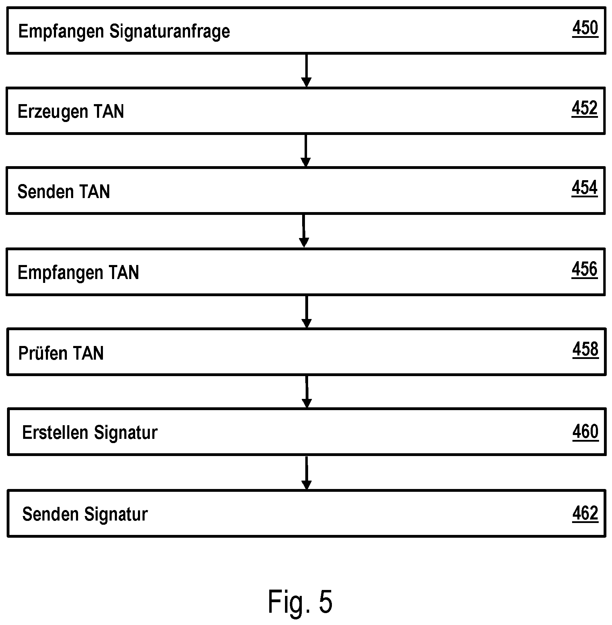

Figur 5 zeigt ein exemplarisches Nutzen eines Fernsignaturdienstes unter Verwendung eines Instant-Messaging-Dienstes im Zuge eines Verfahrens zum Bereitstellen des Fernsignaturdienstes unter Verwendung des Instant-Messaging-Dienstes. In Block 450 empfängt ein Server des Fernsignaturdienstes eine Signaturanfrage zum Erstellen einer digitalen Signatur für ein digitales Dokument mit dem Signaturschlüssel vom dem nutzerseitigen Instant-Messaging-Account über den serverseitigen Instant-Messaging-Account. Voraussetzung für das Signieren des digitalen Dokuments ist beispielsweise ein Empfang einer zusätzlichen Signaturbestätigung des Nutzers durch den Server des Fernsignaturdienstes. Zu diesem Zweck erzeugt der Server des Fernsignaturdienstes in Block 452 beispielsweise eine TAN. In Block 454 sendet der Server des Fernsignaturdienstes die erzeugte TAN an den Nutzer. Beispielsweise handelt es sich bei der TAN um eine SMS-TAN, welche mittels einer SMS an die nutzerseitige erste Telefonnummer des Nutzers gesendet wird. Beispielsweise handelt es sich bei der TAN um eine TAN, welche mittels einer automatisch generierten Sprachnachricht an die nutzerseitige erste Telefonnummer des Nutzers gesendet wird. Beispielsweise handelt es sich bei der TAN um eine TAN, welche mittels einer E-Mail an eine E-Mailadresse des Nutzers gesendet wird.

In Block 456 empfängt der Server des Fernsignaturdienstes in Antwort auf das Senden der TAN die entsprechende TAN als zusätzliche Signaturbestätigung des Nutzers von dem nutzerseitigen Instant-Messaging-Account über den serverseitigen Instant-Messaging-Account. In Block 458 prüft der Server des Fernsignaturdienstes die empfangene TAN. Falls die empfangene TAN identisch ist zu der gesendeten TAN, ist die Signaturbestätigung des Nutzers valide. In Block 460 erstellt der Server des Fernsignaturdienstes eine digitale Signatur für das zu signierende digitale Dokument unter Verwendung eines dem Nutzer des nutzerseitigen Instant-Messaging-Accounts eindeutigen zugeordneten Signaturschlüssels, welcher serverseitig gespeichert ist. In Block 462 sendet der Server des Fernsignaturdienstes die digitale Signatur und/oder das signierte digitale Dokument mit der erstellten digitalen Signatur über den serverseitigen Instant-Messaging-Account an den nutzerseitigen Instant-Messaging-Account.

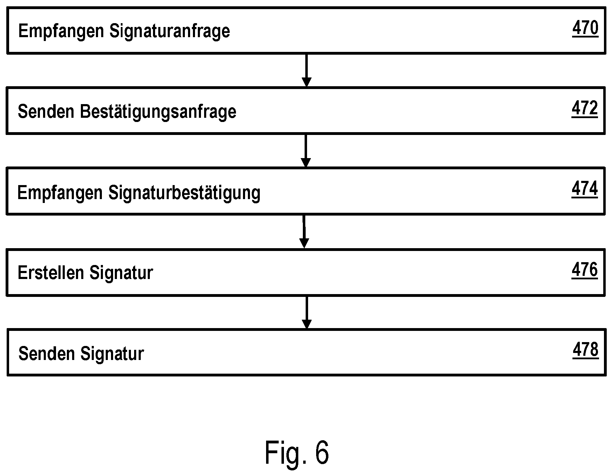

Figur 6 zeigt ein exemplarisches Nutzen eines Fernsignaturdienstes unter Verwendung eines Instant-Messaging-Dienstes im Zuge eines Verfahrens zum Bereitstellen des Fernsignaturdienstes unter Verwendung des Instant-Messaging-Dienstes. In Block 470 empfängt ein Server des Fernsignaturdienstes eine Signaturanfrage zum Erstellen einer digitalen Signatur für ein digitales Dokument mit dem Signaturschlüssel vom dem nutzerseitigen Instant-Messaging-Account über den serverseitigen Instant-Messaging-Account. Voraussetzung für das Signieren des digitalen Dokuments ist beispielsweise ein Empfang einer zusätzlichen Signaturbestätigung des Nutzers durch den Server des Fernsignaturdienstes. Zu diesem Zweck sendet der Server des Fernsignaturdienstes in Block 474 eine Bestätigungsanfrage als Push-Nachricht an eine auf einem mobilen tragbaren Endgerät des Nutzers implementierte Bestätigungsapplikation. In Block 476 empfängt der Server des Fernsignaturdienstes eine zusätzliche Signaturbestätigung des Nutzers als Antwort auf die Bestätigungsanfrage von der Bestätigungsapplikation. In Block 476 erstellt der Server des Fernsignaturdienstes eine digitale Signatur für das zu signierende digitale Dokument unter Verwendung eines dem Nutzer des nutzerseitigen Instant-Messaging-Accounts eindeutigen zugeordneten Signaturschlüssels, welcher serverseitig gespeichert ist. In Block 478 sendet der Server des Fernsignaturdienstes die digitale Signatur und/oder das signierte digitale Dokument mit der erstellten digitalen Signatur über den serverseitigen Instant-Messaging-Account an den nutzerseitigen Instant-Messaging-Account.

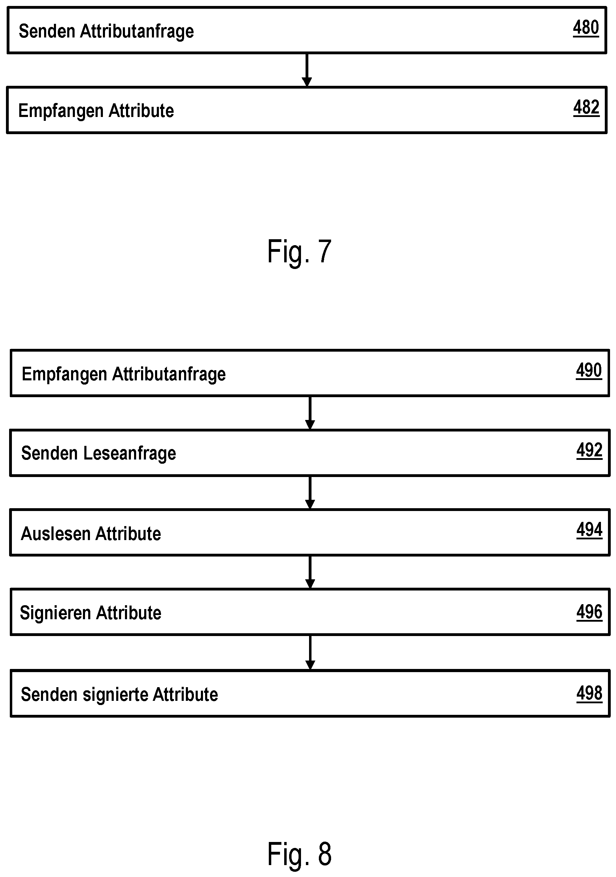

Figur 7 zeigt ein exemplarisches Verfahren zum Identifizieren eines Nutzers im Zuge eines Registrierens des Nutzers zur Nutzung eines Fernsignaturdienstes. In Block 480 sendet ein Server des Fernsignaturdienstes eine Attributanfrage an einen ID-Providerserver zum Bereitstellen von ein oder mehreren Attributen des Nutzers, anhand derer der Nutzer identifiziert werden kann. In Block 482 empfängt der Server des Fernsignaturdienstes in Antwort auf die Attributanfrage die angefragten Attribute von dem ID-Providerserver, anhand derer der Nutzer identifiziert werden kann.

Figur 8 zeigt ein exemplarisches Verfahren zum Bereitstellen von Attributen des Nutzers zwecks Identifizierung des Nutzers im Zuge eines Registrierens des Nutzers zur Nutzung eines Fernsignaturdienstes. In Block 490 empfängt ein ID-Providerserver eine Attributanfrage zum Bereitstellen von ein oder mehreren Attributen des Nutzers von einem Server des Fernsignatur. In Block 492 sendet der ID-Providerserver eine Leseanfrage zum Auslesen der ein oder mehreren angefragten Attribute des Nutzers an einen ID-Token des Nutzers. Der ID-Token wird beispielsweise als eigenständiges elektronisches Gerät bereitgestellt, auf welches der ID-Providerserver über ein Computersystem des Nutzers zugreift. Eine Kommunikation zwischen ID-Token und ID-Providerserver erfolgt beispielsweise über eine verschlüsselte Kommunikationsverbindung zwischen dem ID-Token und dem ID-Providerserver. Beispielsweise ist die entsprechende Kommunikationsverbindung mittels einer Ende-zu-Ende-Verschlüsselung verschlüsselt. Beispielsweise wird der ID-Token in Form einer ID-Applikation, welche auf einem mobilen tragbaren Endgerät des Nutzers installiert ist, bereitgestellt.

In Block 494 liest der ID-Providerserver die Attribute aus dem ID-Token aus. Beispielsweise besitzt der ID-Providerserver ein Berechtigungszertifikat, mit welchem er seine Berechtigung zum Auslesen der Attribute nachweisen kann. Beispielsweise ordnet das Berechtigungszertifikat dem ID-Providerserver einen öffentlichen kryptographischen Schlüssel eines asymmetrischen Schlüsselpaars zu. Der ID-Providerserver verfügt ferner über einen privaten kryptographischen Schlüssel des asymmetrischen Schlüsselpaars. Die Leseanfrage ist beispielsweise mit dem privaten kryptographischen Schlüssel des asymmetrischen Schlüsselpaars signiert. Der ID-Token prüft die Validität der Signatur der Leseanfrage unter Verwendung des Berechtigungszertifikats bzw. des von dem Berechtigungszertifikat bereitgestellten öffentlichen kryptographischen Schlüssel. Auf eine erfolgreiche Validitätsprüfung hin gewährt der ID-Token dem ID-Providerserver einen Lesezugriff auf die Attribute. In Block 496 signiert der ID-Providerserver die ausgelesenen Attribute und sendet diese als Antwort auf die Attributanfrage in Block 498 an den Server des Fernsignaturdienstes.

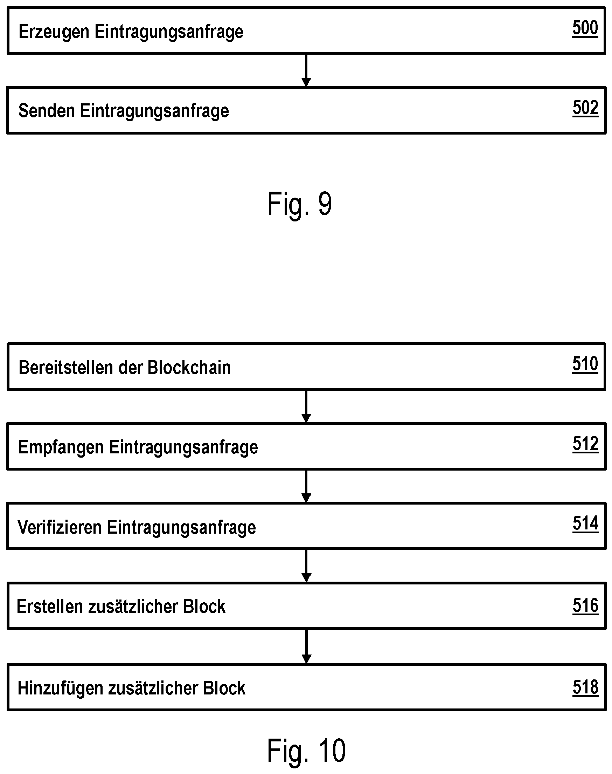

Figur 9 zeigt ein exemplarisches Verfahren zum Eintragen einer von einem Server des Fernsignaturdienstes erstellten Signatur in einen Blockchain. In Block 500 erzeugt der Server des Fernsignaturdienstes eine Eintragungsanfrage zum Eintragen der erstellten Signatur in die Blockchain. Dabei wird die Eintragungsanfrage zur Eintragung der erstellten Signatur von dem Server des Fernsignaturdienstes beispielsweise mit einem Signaturschlüssel des Fernsignaturdienstes signiert. Bei dem Signaturschlüssel des Fernsignaturdienstes handelt es sich beispielsweise um einen privaten kryptographischen Schlüssel des Fernsignaturdienstes, welcher zusammen mit einem öffentlichen kryptographischen Schlüssel des Fernsignaturdienstes ein dem Fernsignaturdienst zugeordnetes asymmetrisches kryptographisches Schlüsselpaar bildet. Dabei dient der öffentliche kryptographische Schlüssel beispielsweise als Signaturprüfschlüssel zum Prüfen von Signaturen, welche mit dem Signaturschlüssel des Fernsignaturdienstes erstellt wurden. In Block 502 sendet der Server des Fernsignaturdienstes die Eintragungsanfrage mit der erstellten digitalen Signatur des digitalen Dokuments an einen Blockchain-Server, welcher die Blockchain oder zumindest einen Teil der Blockchain verwaltet.

Figur 10 zeigt ein exemplarisches Verfahren zum Eintragen einer von einem Server des Fernsignaturdienstes erstellten Signatur in einen Blockchain. In Block 510 stellt ein Blockchain-Server die Blockchain bzw. einer Kopie der Blockchain bereit. In Block 512 empfängt der Blockchain-Server eine Eintragungsanfrage von einem Server eines Fernsignaturdienstes zur Eintragung einer erstellten digitalen Signatur eines digitalen Dokuments in die Blockchain. In Block 514 verifiziert der Blockchain-Server die empfangene Eintragungsanfrage unter Verwendung eines Signaturprüfschlüssels des Servers des Fernsignaturdienstes bzw. des Fernsignaturdienstes. Bei dem Signaturprüfschlüssel des Fernsignaturdienstes handelt es sich beispielsweise um einen öffentlichen kryptographischen Schlüssel des Fernsignaturdienstes, welcher zusammen mit einem privaten kryptographischen Schlüssel des Fernsignaturdienstes ein dem Fernsignaturdienst zugeordnetes asymmetrisches kryptographisches Schlüsselpaar bildet. Dabei dient der öffentliche kryptographische Schlüssel als Signaturprüfschlüssel zum Prüfen von Signaturen, welche mit dem Signaturschlüssel des Fernsignaturdienstes erstellt wurden. Auf eine erfolgreiche Verifizierung der Signatur der Eintragungsanfrage hin, erstellt der Blockchain-Server in Block 516 einen zusätzlichen Block für die Blockchain, in welchen die empfangene digitale Signatur des digitalen Dokuments eingetragen wird. In Block 518 fügt der Blockchain-Server den zusätzlichen Block mit der empfangenen digitalen Signatur des digitalen Dokuments zu der Blockchain hinzu.

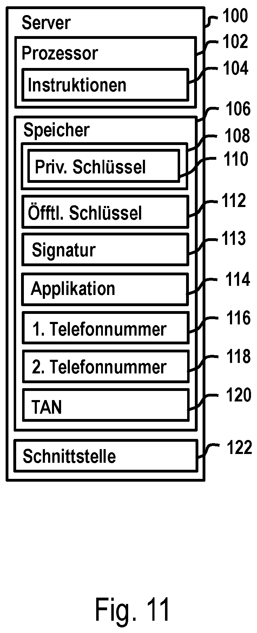

Figur 11 zeigt einen exemplarischen Server 100 eines Fernsignaturdienstes zum Bereitstellen des Fernsignaturdienstes unter Verwendung eines Instant-Messaging-Dienstes. Der Server 100 umfasst einen Prozessor 102 sowie eine Speicher 106. Der Prozessor 102 ist dazu konfiguriert Programminstruktionen 104 auszuführen. Ein Ausführen der Programminstruktionen 104 durch den Prozessor 102 veranlasst den Prozessor 102 beispielsweise dazu, den Server 100 zu Ausführen eines Verfahrens zum Bereitstellen des Fernsignaturdienstes unter Verwendung eines Instant-Messaging-Dienstes zu steuern. In dem Speicher 106 ist beispielsweise eine Instant-Messaging-Applikation 114 des Instant-Messaging-Dienstes gespeichert, welche es dem Server 100 ermöglicht den Instant-Messaging-Dienst zum Bereitstellen von digitalen Signaturen 113 digitaler Dokumente zu steuern. Ferner umfasst der Server 100 eine Kommunikationsschnittstelle 122 zur Kommunikation über ein Netzwerk, beispielsweise das Internet.

Der Server 100 ist dazu konfiguriert im Zuge eines Registrierens eines Nutzers zur Verwendung des Fernsignaturdienstes unter Verwendung der Kommunikationsschnittstelle 122 eine Registrierungsanfrage zum Registrieren des Nutzers von einem Computersystem des Nutzers über das Netzwerk zu empfangen. Die Registrierungsanfrage umfasst eine nutzerseitige erste Telefonnummer 116 des Nutzers, welche der Server 100 beispielsweise in dem Speicher 106 speichert. Der Server 100 erzeugt ein dem registrierten Nutzer eindeutig zugeordnetes asymmetrisches Schlüsselpaar, welches einen privaten kryptographischen Schlüssel 110 und einen öffentlichen kryptographischen Schlüssel 112 umfasst. Der private kryptographischen Schlüssel 110 wird beispielsweise serverseitig in einem geschützten Speicherbereich 108 des Speichers 106 gespeichert. Beispielsweise wird der private kryptographischen Schlüssel 110 unter Verwendung eines HSMs geschützt und der geschützte Speicherbereich 108 durch ein HSM bereitgestellt. Der öffentliche kryptographische Schlüssel 112 wird beispielsweise ebenfalls in dem Speicher 106 gespeichert. Der private kryptographische Schlüssel 110 dient als Signaturschlüssel zum Erstellen von digitalen Signaturen 113 des Nutzers, während der öffentliche kryptographische Schlüssel beispielsweise als Signaturprüfschlüssel zum Prüfen von mit dem Signaturschlüssel 110 erstellten digitalen Signaturen 113 dient. Ferner erzeugt der Server 100 eine dem registrierten Nutzer eindeutig zugeordneten serverseitigen zweiten Telefonnummer 118, welche beispielsweise ebenfalls in dem Speicher 106 gespeichert wird. Unter Verwendung der Instant-Messaging-Applikation 114 richtet der Server 100 einen serverseitigen Instant-Messaging-Account bei dem Instant-Messaging-Dienst ein. Hierzu verwendet der Server 100 die dem Nutzer eindeutig zugeordneten serverseitigen zweite Telefonnummer 118. Diese zweite Telefonnummer 118 dient beispielsweise als Identifikator des entsprechenden serverseitigen Instant-Messaging-Accounts. Der Server 100 sendet unter Verwendung der Instant-Messaging-Applikation 114 eine Kontaktanfrage von dem serverseitigen Instant-Messaging-Account an einen nutzerseitigen Instant-Messaging-Account unter Verwendung der nutzerseitigen ersten Telefonnummer 116. Die erste Telefonnummer 116 dient beispielsweise als Identifikator des entsprechenden nutzerseitigen Instant-Messaging-Accounts. Dem Nutzer wird über die Kontaktanfrage beispielsweise die ihm zugordnete zweite Telefonnummer 118 mitgeteilt, über welche er individuelle Fernsignaturdienste über den Instant-Messaging-Dienst anfragen kann. Die Kontaktanfrage kann der Nutzer von seinem nutzerseitigen Instant-Messaging-Account aus bestätigen, indem er eine Kontaktbestätigung von dem nutzerseitigen Instant-Messaging-Account an den serverseitigen Instant-Messaging-Account sendet. Beispielsweise dient der Empfang der Kontaktbestätigung dem Server 100 als Bestätigung eines erfolgreichen Einrichtens des Fernsignaturdienstes über den Instant-Messaging-Dienst.

Im Zuge des Bereitstellens des Fernsignaturdienstes unter Verwendung des Instant-Messaging-Dienstes empfängt der Server 100 über Kommunikationsschnittstelle 122 mit der Instant-Messaging-Applikation 114 eine Signaturanfrage zum Erstellen einer digitalen Signatur 113 für ein digitales Dokument mit dem Signaturschlüssel 110. Die entsprechende Signaturanfrage wird von dem nutzerseitigen Instant-Messaging-Account an den serverseitigen Instant-Messaging-Account gesendet, auf welchen die Instant-Messaging-Applikation 114 Zugriff besitzt. Der Server 100 erstellt die digitale Signatur 113 für das zu signierende digitale Dokument unter Verwendung des Signaturschlüssels 110 und sendet die digitalen Signatur 113 unter Verwendung der Instant-Messaging-Applikation 114 über den serverseitigen Instant-Messaging-Account an den nutzerseitigen Instant-Messaging-Account zur weiteren Verwendung durch den Nutzer.

Beispielsweise empfängt der Server 100 mit der Signaturanfrage einen Hashwert der zu signierenden Datei, welchen er zum Erstellen der Signatur 113 verwendet. Bei dem zu signierenden digitalen Dokument handelt es sich allgemeinen um einen digitalen Datensatz. Beispielsweise handelt es sich bei dem zu signierenden digitalen Dokument um einen Nachrichtentext, welchen die Signaturanfrage umfasst. Beispielsweise handelt es sich bei dem zu signierenden digitalen Dokument um eine Datei, etwa eine Text-, Audio-, Bild- oder Videodatei. Beispielsweise empfängt der Server 100 das entsprechende zu signierende digitale Dokument mit der Signaturanfrage. Beispielsweise empfängt der Server 100 mit der Signaturanfrage eine Netzwerkadresse, über welche er das zu signierende digitale Dokument auslesen kann. Zur Erhöhung der Sicherheit kann der Server 100 zusätzlich zu der Netzwerkadresse noch eine TAN zum Nachweis einer Leseberechtigung zum Auslesen des zu signierenden digitalen Dokuments empfangen.

Beispielsweise sendet der Server 100 die erstellte digitale Signatur 113 zusammen mit dem digitalen Dokument als signiertes digitales Dokument unter Verwendung der Instant-Messaging-Applikation 114 über den serverseitigen Instant-Messaging-Account an den nutzerseitigen Instant-Messaging-Account zur weiteren Verwendung durch den Nutzer.

Zur zusätzlichen Absicherung des Fernsignaturdienstes kann der Server 100 auf den Empfang der Signaturanfrage hin eine TAN 120 erzeugen und an den Nutzer senden, um eine zusätzliche Signaturbestätigung des Nutzers abzufragen. Der Nutzer empfängt die TAN und sendet diese von seinem nutzerseitigen Instant-Messaging-Account an den serverseitigen Instant-Messaging-Account. Der Server 100 kann die so über den serverseitigen Instant-Messaging-Account mit der Instant-Messaging-Applikation 114 empfangene TAN mit der gesendeten TAN 120, welche in dem Speicher 106 gespeichert ist, vergleichen. Stimmen beide überein, ist die zusätzliche Signaturbestätigung in Form der empfangenen TAN erfolgreich. Bei der TAN handelt es sich beispielsweise um eine SMS-TAN, welche mittels einer SMS an die nutzerseitige erste Telefonnummer 116 des Nutzers gesendet wird. Hierzu umfasst der Server 100 beispielsweise eine zusätzliche Kommunikationsschnittstelle zur Kommunikation über ein Telekommunikationsnetzwerk, etwa ein zelluläres Mobilfunknetz. Beispielsweise wird die TAN mittels einer automatisch generierten Sprachnachricht an die nutzerseitige erste Telefonnummer 116 des Nutzers gesendet. Hierzu umfasst der Server 100 beispielsweise eine zusätzliche Kommunikationsschnittstelle zur Kommunikation über ein Telekommunikationsnetzwerk, etwa ein zelluläres Mobilfunknetz. Beispielsweise wird die TAN mittels einer E-Mail an eine E-Mailadresse des Nutzers gesendet.

Beispielsweise erfolgt eine zusätzliche Bestätigung der Signaturanfrage durch den Nutzer unter Verwendung einer auf einem mobilen tragbaren Endgerät des Nutzers implementierte Bestätigungsapplikation. Beispielsweise sendet der Server 100 eine Bestätigungsanfrage als Push-Nachricht an die auf dem mobilen tragbaren Endgerät des Nutzers implementierte Bestätigungsapplikation. Der Nutzer kann dann unter Verwendung der Bestätigungsapplikation eine zusätzliche Signaturbestätigung als Antwort auf die Bestätigungsanfrage an den Server 100 senden.

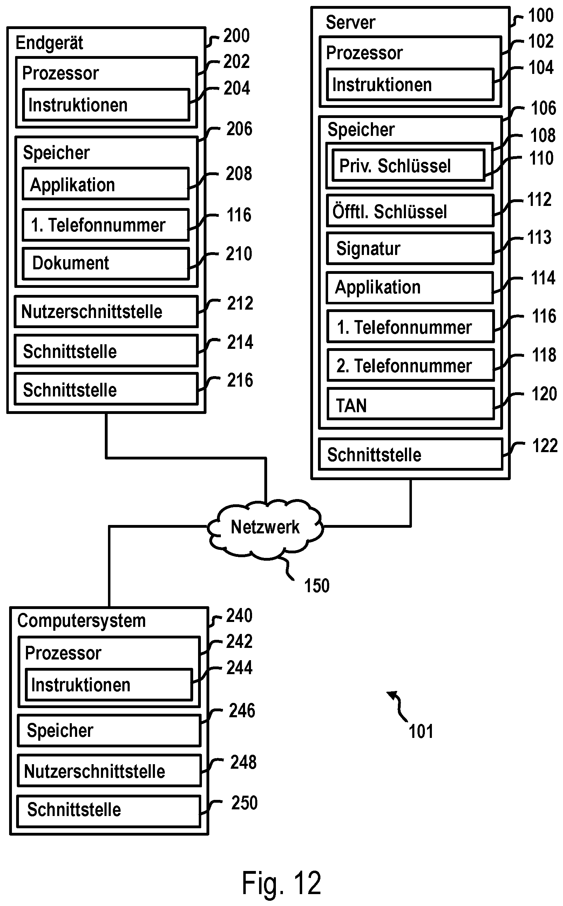

Figur 12 zeigt ein exemplarisches System 101 zum Bereitstellen eines Fernsignaturdienstes unter Verwendung eines Instant-Messaging-Dienstes. Das System 101 umfasst einen Server 100 des Fernsignaturdienstes, welcher beispielsweise dem Server 100 aus Figur 11 entspricht. Ferner umfasst das System 101 beispielsweise ein Computersystem 240 zum Registrieren des Nutzers bei dem Fernsignaturdienst. Ferner umfasst das System 101 beispielsweise ein mobiles tragbares Endgerät 200 zur Nutzung des von dem Server 100 bereitgestellten Fernsignaturdienstes unter Verwendung eines Instant-Messaging-Dienstes. Beispielsweise kann das Registrieren des Nutzers auch unter Verwendung des mobilen tragbaren Endgeräts 200 anstelle des Computersystems 240 ausgeführt werden.

Das Computersystem 240 umfasst einen Prozessor 242, einen Speicher 246 und eine Kommunikationsschnittstelle 250 zur Kommunikation mit dem Server 100 des Fernsignaturdienstes über das Netzwerk 150, beispielsweise das Internet. Ferner umfasst das Computersystem 240 eine Nutzerschnittstelle 248, über welche der Nutzer das Computersystem 240 steuern kann. Der Prozessor 242 ist beispielsweise dazu konfiguriert Programminstruktionen 244 auszuführen, welche beispielsweise in dem Speicher 246 des Computersystems 240 gespeichert sind. Ein Ausführen der Programminstruktionen 244 durch den Prozessor 242 veranlasst den Prozessor 242 beispielsweise dazu, das Computersystem 240 zu einem Registrieren des Nutzers bei dem Fernsignaturdienstes zu steuern. Hierzu sendet das Computersystem 240 beispielsweise eine Registrierungsanfrage zum Registrieren des Nutzers über das Netzwerk 150 an den Server 100 des Fernsignaturdienstes. Die Registrierungsanfrage umfasst beispielsweise die nutzerseitige Telefonnummer 116 des Nutzers. Bei dieser nutzerseitige Telefonnummer 116 des Nutzers handelt es sich beispielsweise um eine Mobilfunknummer des mobilen tragbaren Endgeräts 200, bei welchem es sich beispielsweise um ein mobiles tragbares Telekommunikationsendgerät handelt.

Das mobile tragbare Endgerät 200 umfasst beispielsweise einen Prozessor 202, einen Speicher 206 und eine erste Kommunikationsschnittstelle 216 zur Kommunikation mit dem Server 100 des Fernsignaturdienstes über das Netzwerk 150, beispielsweise das Internet. Beispielsweise handelt es sich bei dem mobilen tragbaren Endgerät 200 um ein mobiles tragbares Telekommunikationsendgerät, welches dazu konfiguriert ist über ein zellulares Telekommunikationsnetzwerk, beispielsweise ein Mobilfunknetzwerk, zu kommunizieren. Zu diesem Zweck umfasst das mobile tragbare Endgerät 200 beispielsweise eine zweite Kommunikationsschnittstelle 208 zur Kommunikation über das zellulare Telekommunikationsnetzwerk, beispielsweise ein Mobilfunknetzwerk. Das mobile tragbare Endgerät 200 umfasst beispielsweise die Telefonnummer 116, beispielsweise eine Mobilfunknummer, unter welcher das mobile tragbare Endgerät 200 über das zellulare Telekommunikationsnetzwerk, beispielsweise ein Mobilfunknetzwerk, erreichbar ist.

Das mobile tragbare Endgerät 200 umfasst ferner eine Nutzerschnittstelle, etwa in Form einen Touchscreen, über welche der Nutzer Funktionen des mobilen tragbaren Endgerät 200, insbesondere eine Nutzung des von dem Server 100 bereitgestellten Fernsignaturdienstes unter Verwendung des Instant-Messaging-Dienstes, steuern kann. Hierzu umfasst das mobile tragbare Endgerät 200 beispielsweise eine Instant-Messaging-Applikation 208 des Instant-Messaging-Dienstes, die in dem Speicher 206 gespeichert ist, mit einem Instant-Messaging-Account, welcher der Telefonnummer 116 des Nutzers zugeordnet ist. Die Instant-Messaging-Applikation 208 ermöglicht es dem mobilen tragbaren Endgerät 200 mit dem Server 100 des Fernsignaturdienstes über den Instant-Messaging-Dienst zum Bereitstellen von digitalen Signaturen 113 digitaler Dokumente zu kommunizieren. Beispielsweise ist in dem Speicher 206 des mobilen tragbaren Endgeräts 200 das zu signierende digitale Dokument 210 gespeichert, welches unter Verwendung des von dem Server 100 bereitgestellten Fernsignaturdienstes zu signieren ist. Zum Erstellen einer Signatur 113 sendet das mobile tragbare Endgerät 200 das zu signierende digitale Dokument 210 beispielsweise unter Verwendung der Instant-Messaging-Applikation 208 von dem nutzerseitigen Instant-Messaging-Account an den serverseitigen Instant-Messaging-Account. Beispielsweise berechnet das mobile tragbare Endgerät 200 einen Hashwert des zu signierenden digitalen Dokument 210 unter Verwendung der Instant-Messaging-Applikation 208 von dem nutzerseitigen Instant-Messaging-Account an den serverseitigen Instant-Messaging-Account zum Erstellen der digitalen Signatur 113. Beispielsweise sendet das mobile tragbare Endgerät 200 eine Netzwerkadresse, über welche das zu signierende digitale Dokument ausgelesen werden kann, unter Verwendung der Instant-Messaging-Applikation 208 von dem nutzerseitigen Instant-Messaging-Account an den serverseitigen Instant-Messaging-Account.

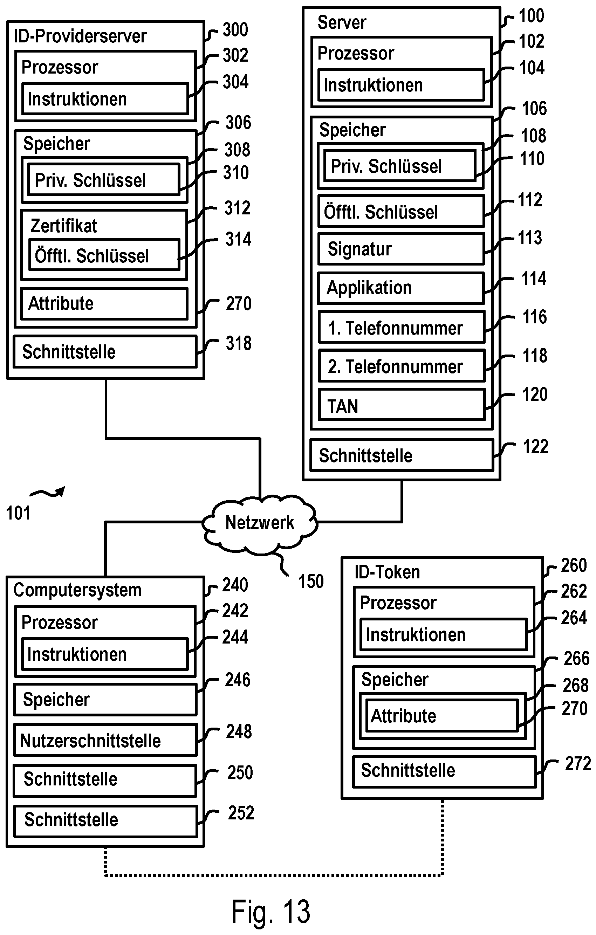

Figur 13 zeigt ein System 101, welches dazu konfiguriert ist den Nutzer im Zuge des Registrierens für die Nutzung des Fernsignaturdienstes unter Verwendung eines Instant-Messaging-Dienstes zu identifizieren. Das System umfasst einen Server 100 des Fernsignaturdienstes, welcher beispielsweise dem Server 100 aus Figur 11 entspricht. Ferner umfasst das System 101 beispielsweise ein Computersystem 240, welches dem Computersystem 240 aus Figur 12 entspricht. Das Computersystem 240 dient als Terminal zum Auslesen von ein oder mehreren Attributen 270 aus einem ID-Token 260 zum Identifizieren des Nutzers. Hierzu umfasst das Computersystem 252 beispielsweise eine zusätzliche Kommunikationsschnittstelle 252 zum Herstellen einer kontaktlosen Kommunikationsverbindung mit dem ID-Token 260, beispielsweise über NFC. Alternativerweise könnte auch das mobile tragbare Endgerät 200 aus Figur 12 als Terminal zum Auslesen der ein oder mehreren Attributen 270 aus dem ID-Token 260 zum Identifizieren des Nutzers verwendet werden. Hierzu müsste das mobile tragbare Endgerät 200 beispielsweise ein zusätzliche Kommunikationsschnittstelle 252 zum Herstellen einer kontaktlosen Kommunikationsverbindung mit dem ID-Token 260, beispielsweise über NFC, umfassen. Ferner umfasst das System 101 einen ID-Providerserver 300 eines ID-Providerserver zum Auslesen der ein oder mehreren Attribute 270 aus dem ID-Token 260.

Der ID-Providerserver 300 umfasst einen Prozessor 302, einen Speicher 306 und eine Kommunikationsschnittstelle 318 zur Kommunikation mit dem Computersystem 240 zum Zugriff auf den ID-Token 260 und dem Server 100 des Fernsignaturdienstes über das Netzwerk 150, beispielsweise das Internet. Zum Identifizieren des Nutzers sendet der Server 100 des Fernsignaturdienstes im Zuge des Registrierens des Nutzers für den Fernsignaturdienst eine Attributanfrage an den ID-Providerserver 300. Der Prozessor 302 des ID-Providerserver 300 führt Programminstruktionen 304 aus, welche beispielsweise in dem Speicher 306 des ID-Providerservers 300 gespeichert sind. Das Ausführen der Programminstruktionen 304 durch den Prozessor 302 des ID-Providerservers 300 veranlasst den Prozessor 302 beispielsweise dazu, den ID-Providerserver 300 zum Bereitstellen ein oder mehrerer in dem ID-Token 260 gespeicherter Attribute 270 zu steuern. Der ID-Providerserver 300 baut über das Netzwerk 150 und das Computersystem 240 eine Kommunikationsverbindung mit dem ID-Token 260 auf. Bei der Kommunikationsverbindung handelt es sich beispielsweise um eine verschlüsselte Kommunikationsverbindung, insbesondere eine mittels Ende-zu-Ende-Verschlüsselung verschlüsselte Kommunikationsverbindung. Der ID-Providerserver 300 sendet eine Leseanfrage zum Auslesen der ein oder mehreren Attribute 270 über die Kommunikationsverbindung an den ID-Token 260. Beispielsweise ist die Lebensfrage mit dem Signaturschlüssel 310 des ID-Providerdienstes signiert. Der Signaturschlüssel 310, bei welchem es sich beispielsweise um einen privaten kryptographischen Schlüssel eines asymmetrischen Schlüsselpaars des ID-Providerdienstes handelt, ist beispielsweise in einem geschützten Speicherbereich 308 des Speichers 306 des ID-Providerserver 300 gespeichert. Beispielsweise wird der Signaturschlüssel 310 unter Verwendung eines HSMs geschützt und der geschützte Speicherbereich 308 durch ein HSM bereitgestellt. Zum Auslesen der Attribute 270 aus dem ID-Token 260 umfasst der ID-Providerserver 300 beispielsweiseferner ein Berechtigungszertifikat 312, mit welchem der ID-Providerserver 300 seine Berechtigung zum Auslesen der Attribute 270 nachweisen kann. Das Berechtigungszertifikat 312 umfasst einen öffentlichen kryptographischen Schlüssel 314 des asymmetrischen Schlüsselpaars des ID-Providerdienstes als Signaturprüfschlüssel zum Prüfen von mit dem Signaturschlüssel 310 erstellten digitalen Signaturen.

Der ID-Token 260 umfasst einen Prozessor 262, einen Speicher 266 und eine Kommunikationsschnittstelle 272 zur kontaktlosen Kommunikation mit dem Computersystem 240, beispielsweise über NFC. In einem geschützten Speicherbereich 268 des Speichers 266 sind Attribute des Nutzers gespeicherte. Der Prozessor 262 des ID-Tokens 260 führt Programminstruktionen 264 aus, welche beispielsweise in dem Speicher 266 des ID-Tokens 260 gespeichert sind. Das Ausführen der Programminstruktionen 264 durch den Prozessor 262 des ID-Tokens 260 veranlasst den Prozessor 262 beispielsweise dazu, den ID-Token 260 zum Bereitstellen ein oder mehrerer der in dem ID-Token 260 gespeicherter Attribute 270 zu steuern. Der ID-Token 260 prüft beispielsweise die Signatur der Leseanfrage, etwa unter Verwendung des Berechtigungszertifikat 312. Auf eine erfolgreiche Prüfung der Lebensfrage hin gewährt der ID-Token 260 dem ID-Providerserver 300 beispielsweise einen Lesezugriff auf die Attribute 270.

Für eine Freigabe des Lesezugriffs ist beispielsweise ferner eine erfolgreiche Authentifizierung des Nutzers gegenüber dem ID-Token 260, etwa unter Verwendung der Nutzerschnittstelle 248 des Computersystems 240, notwendig. Die Authentifizierung des Nutzers umfasst beispielsweise eine Eingabe einer PIN und/oder ein erfassen biometrischer Authentifizierungsdaten des Nutzers.

Der ID-Providerserver 300 liest die Attribute 270 aus dem ID-Token 260 aus, signiert die ausgelesenen Attribute 270 und leitet diese zur Identifizierung des Nutzers an den Server 100 des Fernsignaturdienstes weiter. Beispielsweise signiert der ID-Providerserver 300 die ausgelesenen Attribute 270 mit dem Signaturschlüssel 310. Beispielsweise umfasst der ID-Providerserver 300 zum Signieren der ausgelesenen Attribute 270 einen weiteren Signaturschlüssel, welcher beispielsweise ebenfalls in dem geschützten Speicherbereich 308 des Speichers 306 gespeichert ist.

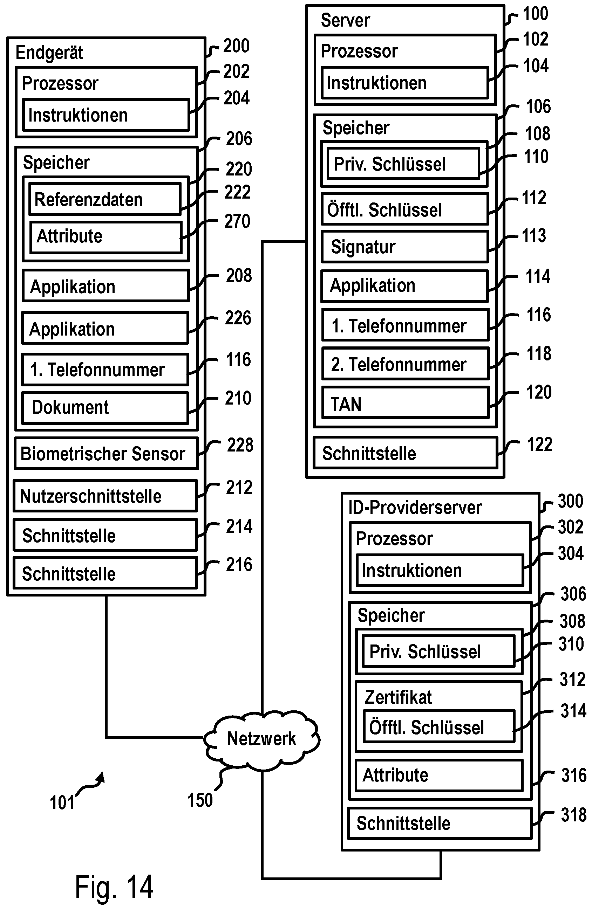

Figur 14 zeigt ein System 101, welches dazu konfiguriert ist den Nutzer im Zuge des Registrierens für die Nutzung des Fernsignaturdienstes unter Verwendung eines Instant-Messaging-Dienstes zu identifizieren. Das System 101 umfasst einen Server 100 des Fernsignaturdienstes, welcher beispielsweise dem Server 100 aus Figur 11 entspricht. Ferner umfasst das System 101 beispielsweise einen ID-Providerserver 300, welcher beispielsweise dem ID-Providerserver 300 aus Figur 13 entspricht. Zudem umfasst das System 101 ein mobiles tragbares Endgerät 200, welches dem mobilen tragbaren Endgerät 200 aus Figur 12 entspricht. Das mobile tragbare Endgerät 200 umfasst zusätzlich einen ID-Token, welcher in Form einer auf dem mobilen tragbaren Endgerät 200 installierten ID-Applikation 226 bereitgestellt wird. Die Attribute 270 des Nutzers sind in diesem Fall beispielsweise in einem geschützten Speicherbereich 220 des Speichers 206 des mobilen tragbaren Endgeräts 200 gespeichert.

Der ID-Providerserver 300 sendet die Leseanfrage an das mobile tragbare Endgerät 200. Das Ausführen der Programminstruktionen 204 durch den Prozessor 202 des mobilen tragbaren Endgeräts 200 veranlasst den Prozessor 202 beispielsweise dazu, das mobile tragbare Endgerät 200 zusätzlich zum Bereitstellen ein oder mehrerer der in dem mobilen tragbaren Endgerät 200 gespeicherten Attribute 270 unter Verwendung der ID-Applikation zu steuern. Das mobile tragbare Endgerät 200 prüft beispielsweise die Signatur der Leseanfrage, etwa unter Verwendung des Berechtigungszertifikat 312. Auf eine erfolgreiche Prüfung der Lebensfrage hin gewährt das mobile tragbare Endgerät 200 dem ID-Providerserver 300 beispielsweise einen Lesezugriff auf die Attribute 270.

Für eine Freigabe des Lesezugriffs ist beispielsweise ferner eine erfolgreiche Authentifizierung des Nutzers gegenüber dem mobile tragbare Endgerät 200, etwa unter Verwendung der Nutzerschnittstelle 212 und/oder des biometrischen Sensors 228 des mobilen tragbaren Endgeräts 200, notwendig. Die Authentifizierung des Nutzers umfasst beispielsweise eine Eingabe einer PIN und/oder ein erfassen biometrischer Authentifizierungsdaten des Nutzers. Ein erfolgreiches Authentifizieren des Nutzers setzt dabei beispielsweise ein Übereinstimmen bzw. ein ausreichendes Übereinstimmen der erfassten biometrischen Authentifizierungsdaten mit hinterlegten biometrischen Referenzdaten 222 des Nutzers voraussetzt. Die biometrischen Referenzdaten 222 des Nutzers sind beispielsweise in einem geschützten Speicherbereich 220 des Speichers 206 des mobilen tragbaren Endgeräts 200 hinterlegt.

Bei dem biometrischen Sensor 228 handelt es sich beispielsweise um einen Sensor zur Erfassung von DNA-Daten, Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster, Zahnmusterdaten und/oder verhaltensbasierte Daten, wie etwa Daten Bewegungsmuster, Gangmuster, Arm-, Hand-, Fingerbewegungsmuster, Lippenbewegungsmuster. Zum Erfassen der entsprechenden biometrischen Authentifizierungsdaten umfasst der biometrische Sensor 228 beispielsweise eine optische Sensorkomponente zum Erfassen elektromagnetischer Strahlung im sichtbaren und/oder jenseits des sichtbaren Spektrums, eine akustische Sensorkomponente zum Erfassen akustischer Signale und/oder einen Bewegungssensor zum Erfassen von Bewegungen des Endgeräts, wenn es der Nutzer bei sich trägt und/oder verwendet. Die biometrischen Authentifizierungsdaten können beispielsweise ein oder mehrere der folgenden Daten umfassen: DNA-Daten, Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster, Zahnmusterdaten, Zahnmusterdaten und/oder verhaltensbasierte Daten, wie etwa Daten Bewegungsmuster, Gangmuster, Arm-, Hand-, Fingerbewegungsmuster, Lippenbewegungsmuster.

Der ID-Providerserver 300 liest die Attribute 270 aus dem mobilen tragbaren Endgerät 200 aus, signiert die ausgelesenen Attribute 270 und leitet diese zur Identifizierung des Nutzers an den Server 100 des Fernsignaturdienstes weiter. Beispielsweise signiert der ID-Providerserver 300 die ausgelesenen Attribute 270 mit dem Signaturschlüssel 310. Beispielsweise umfasst der ID-Providerserver 300 zum Signieren der ausgelesenen Attribute 270 einen weiteren Signaturschlüssel, welcher beispielsweise ebenfalls in dem geschützten Speicherbereich 308 des Speichers 306 gespeichert ist.

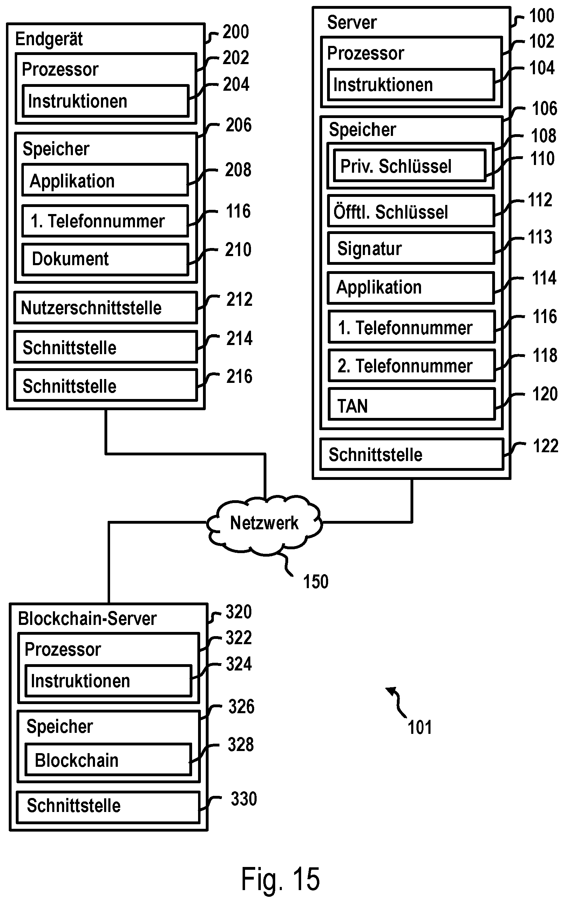

Figur 15 zeigt ein System 101, welches dazu konfiguriert ist eine mittels Fernsignaturdienst unter Verwendung eines Instant-Messaging-Dienstes erstellte digitale Signatur 113 in eine Blockchain 328 einzutragen. Das System 101 umfasst einen Server 100 des Fernsignaturdienstes, welcher beispielsweise dem Server 100 aus Figur 11 entspricht. Ferner umfasst das System 101 ein mobiles tragbares Endgerät 200, welches dem mobilen tragbaren Endgerät 200 aus Figur 12 entspricht. Nach dem Erstellen der digitalen Signatur 113 erzeugt der Server 100 des Fernsignaturdienstes eine Eintragungsanfrage zum Eintragen der erstellten Signatur 113 in die Blockchain 328, welche von dem Blockchain-Server 100 verwaltet wird. Dabei wird die Eintragungsanfrage zur Eintragung der erstellten Signatur 113 von dem Server 100 des Fernsignaturdienstes beispielsweise mit einem Signaturschlüssel des Fernsignaturdienstes signiert. Bei dem Signaturschlüssel des Fernsignaturdienstes handelt es sich beispielsweise um einen privaten kryptographischen Schlüssel des Fernsignaturdienstes, welcher zusammen mit einem öffentlichen kryptographischen Schlüssel des Fernsignaturdienstes ein dem Fernsignaturdienst zugeordnetes asymmetrisches kryptographisches Schlüsselpaar bildet. Dabei dient der öffentliche kryptographische Schlüssel beispielsweise als Signaturprüfschlüssel zum Prüfen von Signaturen, welche mit dem Signaturschlüssel des Fernsignaturdienstes erstellt wurden. Der Server 100 des Fernsignaturdienstes sendet die Eintragungsanfrage mit der erstellten digitalen Signatur 113 des digitalen Dokuments 210 an einen Blockchain-Server 320, welcher die Blockchain 328 oder zumindest einen Teil der Blockchain 328 verwaltet.

Der Blockchain-Server 320 umfasst einen Prozessor 322, einen Speicher 326 und eine Kommunikationsschnittstelle 330 zur Kommunikation mit dem Server 100 des Fernsignaturdienstes über das Netzwerk 150, beispielsweise das Internet. In dem Speicher 326 des Blockchain-Servers 320 ist beispielsweise eine Kopie der Blockchain 328 gespeicherte. Der Prozessor 322 des Blockchain-Servers 320 führt Programminstruktionen 324 aus, welche beispielsweise in dem Speicher 326 des Blockchain-Servers 320 gespeichert sind. Das Ausführen der Programminstruktionen 324 durch den Prozessor 322 des Blockchain-Servers 320 veranlasst den Prozessor 322 beispielsweise dazu, den Blockchain-Server 320 zum Eintragen der von dem Server 100 des Fernsignaturdienstes für den Nutzer erstellten digitalen Signatur 113 in die Blockchain 328 zu steuern.

Der Blockchain-Server 320 empfängt die Eintragungsanfrage von einem Server 100 eines Fernsignaturdienstes zur Eintragung einer erstellten digitalen Signatur 113 eines digitalen Dokuments 210 in die Blockchain 328. Beispielsweise verifiziert der Blockchain-Server 320 die empfangene Eintragungsanfrage unter Verwendung eines Signaturprüfschlüssels des Servers 100 des Fernsignaturdienstes bzw. des Fernsignaturdienstes. Bei dem Signaturprüfschlüssel des Fernsignaturdienstes handelt es sich beispielsweise um einen öffentlichen kryptographischen Schlüssel des Fernsignaturdienstes, welcher zusammen mit einem privaten kryptographischen Schlüssel des Fernsignaturdienstes ein dem Fernsignaturdienst zugeordnetes asymmetrisches kryptographisches Schlüsselpaar bildet. Dabei dient der öffentliche kryptographische Schlüssel als Signaturprüfschlüssel zum Prüfen von Signaturen, welche mit dem Signaturschlüssel des Fernsignaturdienstes erstellt wurden. Auf eine erfolgreiche Verifizierung der Signatur der Eintragungsanfrage hin, erstellt der Blockchain-Server 320 einen zusätzlichen Block für die Blockchain 328, in welchen die empfangene digitale Signatur 113 des digitalen Dokuments 210 eingetragen wird. Der Blockchain-Server 320 fügt den zusätzlichen Block mit der empfangenen digitalen Signatur 113 des digitalen Dokuments 210 zu der Blockchain 328 hinzu.

Obwohl die Erfindung in den Zeichnungen und der vorstehenden Beschreibung ausführlich veranschaulicht und beschrieben ist, ist diese Veranschaulichung und Beschreibung als beispielhaft und nicht einschränkend zu betrachten; die Erfindung ist nicht auf die offenbarten Ausführungsformen beschränkt.

### LISTE DER BEZUGSZEICHEN

- 100: Fernsignaturdienstserver
- 101: System
- 102: Prozessor
- 104: Programminstruktionen
- 106: Speicher
- 108: geschützter Speicherbereich
- 110: privater kryptographischer Schlüssel
- 112: öffentlicher kryptographischer Schlüssel
- 113: Signatur
- 114: Instant-Messaging-Applikation
- 116: erste Telefonnummer
- 118: zweite Telefonnummer
- 120: Transaktionsnummer
- 122: Kommunikationsschnittstelle
- 150: Netzwerk
- 200: Endgerät
- 202: Prozessor
- 204: Programminstruktionen
- 206: Speicher
- 208: Instant-Messaging-Applikation
- 210: digitales Dokument
- 212: Nutzerschnittstelle
- 214: Kommunikationsschnittstelle
- 216: Kommunikationsschnittstelle
- 220: geschützter Speicherbereich
- 222: Referenzdaten
- 226: ID-Applikation
- 228: biometrischer Sensor
- 240: Computersystem
- 242: Prozessor
- 244: Programminstruktionen
- 246: Speicher
- 248: Nutzerschnittstelle
- 250: Kommunikationsschnittstelle
- 252: Kommunikationsschnittstelle
- 260: ID-Token
- 262: Prozessor
- 264: Programminstruktionen
- 266: Speicher
- 268: geschützter Speicherbereich
- 270: Attribute
- 272: Kommunikationsschnittstelle
- 300: ID-Providerserver
- 302: Prozessor
- 304: Programminstruktionen
- 306: Speicher
- 308: geschützter Speicherbereich
- 310: privater kryptographischer Schlüssel
- 312: Zertifikat
- 314: öffentlicher kryptographischer Schlüssel
- 318: Kommunikationsschnittstelle
- 320: Blockchain-Server
- 322: Prozessor
- 324: Programminstruktionen
- 326: Speicher
- 328: Blockchain
- 330: Kommunikationsschnittstelle

## Patentansprüche

1. Verfahren zum Bereitstellen eines Fernsignaturdienstes unter Verwendung eines Instant-Messaging-Dienstes, wobei das Verfahren durch einen Server (100) des Fernsignaturdienstes umfasst:
• Registrieren eines Nutzers zur Verwendung des Fernsignaturdienstes, wobei das Registrieren umfasst:
∘ Empfangen einer Registrierungsanfrage zum Registrieren des Nutzers von einem Computersystem (200; 240) des Nutzers über ein Netzwerk (150), wobei die Registrierungsanfrage eine nutzerseitige erste Telefonnummer (116) des Nutzers umfasst,
∘ Erzeugen und serverseitiges Speichern eines dem registrierten Nutzer eindeutig zugeordneten asymmetrischen kryptographischen Schlüsselpaars, wobei das asymmetrische kryptographische Schlüsselpaar einen privaten kryptographischen Schlüssel (110) als Signaturschlüssel zum Erstellen von digitalen Signaturen (113) des Nutzers und einen öffentlichen kryptographischen Schlüssel (112) als Signaturprüfschlüssel zum Prüfen von mit dem Signaturschlüssel (110) erstellten digitalen Signaturen (113) umfasst,
∘ Erzeugen einer dem registrierten Nutzer eindeutig zugeordneten serverseitigen zweiten Telefonnummer (118),
∘ Einrichten eines serverseitigen Instant-Messaging-Accounts bei dem Instant-Messaging-Dienst unter Verwendung der dem Nutzer eindeutig zugeordneten serverseitigen zweiten Telefonnummer (118),
∘ Senden einer Kontaktanfrage von dem serverseitigen Instant-Messaging-Account an einen nutzerseitigen Instant-Messaging-Account unter Verwendung der nutzerseitigen ersten Telefonnummer (116),
∘ Empfangen einer Kontaktbestätigung von dem nutzerseitigen Instant-Messaging-Account als Bestätigung eines erfolgreichen Einrichtens des Fernsignaturdienstes über den Instant-Messaging-Dienst,
• Empfangen einer Signaturanfrage zum Erstellen einer digitalen Signatur (113) für ein digitales Dokument (210) mit dem Signaturschlüssel (110) vom dem nutzerseitigen Instant-Messaging-Account über den serverseitigen Instant-Messaging-Account,
• Erstellen einer digitalen Signatur (113) für das zu signierende digitale Dokument (210) unter Verwendung des Signaturschlüssels (110),
• Senden der digitalen Signatur (113) über den serverseitigen Instant-Messaging-Account an den nutzerseitigen Instant-Messaging-Account.

2. Verfahren nach Anspruch 1, wobei die digitale Signatur (113) zusammen mit dem digitalen Dokument (210) als signiertes digitales Dokument über den serverseitigen Instant-Messaging-Account an den nutzerseitigen Instant-Messaging-Account gesendet wird.

3. Verfahren nach einem der vorangehenden Ansprüche, wobei das Verfahren ferner ein Bereitstellen eines Zertifikats einer PKI umfasst, welches den Signaturprüfschlüssel (112) umfasst, wobei die digitale Signatur (113) zusammen mit dem Zertifikat über den serverseitigen Instant-Messaging-Account an den nutzerseitigen Instant-Messaging-Account gesendet wird.

4. Verfahren nach einem der vorangehenden Ansprüche, wobei Voraussetzung für das Signieren des digitalen Dokuments (210) ein Empfang einer zusätzlichen Signaturbestätigung des Nutzers ist.

5. Verfahren nach Anspruch 4, wobei das Verfahren ferner umfasst:
• Senden einer ersten TAN (120) an den Nutzer,
• Empfangen der ersten TAN (120) als zusätzliche Signaturbestätigung des Nutzers von dem nutzerseitigen Instant-Messaging-Account über den serverseitigen Instant-Messaging-Account.

6. Verfahren nach Anspruch 5, wobei es sich bei der ersten TAN (120) um eine SMS-TAN handelt, welche mittels einer SMS an die nutzerseitige erste Telefonnummer (116) des Nutzers gesendet wird, oder
wobei die erste TAN (120) mittels einer automatisch generierten Sprachnachricht an die nutzerseitige erste Telefonnummer (116) des Nutzers gesendet wird, oder
wobei die erste TAN (120) mittels einer E-Mail an eine E-Mailadresse des Nutzers gesendet wird.

7. Verfahren nach Anspruch 4, wobei eine Bestätigungsanfrage als Push-Nachricht an eine auf einem mobilen tragbaren Endgerät des Nutzers implementierte Bestätigungsapplikation gesendet wird, wobei die zusätzliche Signaturbestätigung des Nutzers als Antwort auf die Bestätigungsanfrage von der Bestätigungsapplikation empfangen wird.

8. Verfahren nach einem der vorangehenden Ansprüche, wobei das zu signierende digitale Dokument (210) von dem nutzerseitigen Instant-Messaging-Account über den serverseitigen Instant-Messaging-Account empfangen wird.

9. Verfahren nach Anspruch 8, wobei die Signaturanfrage in Form des zu signierenden digitalen Dokuments (210) empfangen wird.

10. Verfahren nach Anspruch 8, wobei die Signaturanfrage das zu signierende digitale Dokument (210) in Form eines Nachrichtentextes, einer Textdatei, einer Bilddatei oder einer Videodatei umfasst.

11. Verfahren nach einem der Ansprüche 1 bis 7, wobei die Signaturanfrage einen Hashwert des zu signierenden Dokuments (210) umfasst, welcher zum Erstellen der digitalen Signatur (113) für das zu signierende digitale Dokument (210) verwendet wird.

12. Verfahren nach einem der Ansprüche 1 bis 7, wobei die Signaturanfrage eine Angabe einer Netzwerkadresse umfasst, über welche das zu signierende digitale Dokument von dem Server (100) ausgelesen werden kann, wobei das Verfahren ferner ein Auslesen des zu signierenden digitalen Dokuments unter Verwendung der Netzwerkadresse umfasst.

13. Verfahren nach Anspruch 12, wobei die Signaturanfrage ferner eine zweite TAN zum Nachweis einer Leseberechtigung zum Auslesen des zu signierenden digitalen Dokuments (210) umfasst, wobei der Server (100) beim Auslesen des zu signierenden digitalen Dokuments (210) unter Verwendung der Netzwerkadresse die zweite TAN zum Nachweis der Leseberechtigung verwendet.

14. Verfahren nach einem der vorangehenden Ansprüche, wobei das Registrieren des Nutzers ferner ein Identifizieren des Nutzers umfasst.

15. Verfahren nach einem der vorangehenden Ansprüche, wobei das Verfahren ferner ein Eintragen der erstellten Signatur (113) in eine Blockchain (328) umfasst.

16. Server (100) zum Bereitstellen eines Fernsignaturdienstes unter Verwendung eines Instant-Messaging-Dienstes, wobei der Server (100) einen Prozessor (102) und einen Speicher (106) mit Programminstruktionen (104) umfasst, wobei der Server (100) eine Kommunikationsschnittstelle (122) zur Kommunikation über ein Netzwerk (150) umfasst, wobei ein Ausführen der Programminstruktionen (104) durch den Prozessor (102) den Prozessor (102) dazu veranlasst, den Server (100) zu steuern zum:
• Registrieren eines Nutzers zur Verwendung des Fernsignaturdienstes, wobei das Registrieren umfasst:
o Empfangen einer Registrierungsanfrage zum Registrieren des Nutzers von einem Computersystem (200; 240) des Nutzers über ein Netzwerk (150), wobei die Registrierungsanfrage eine nutzerseitige erste Telefonnummer (116) des Nutzers umfasst,
o Erzeugen und serverseitiges Speichern eines dem registrierten Nutzer eindeutig zugeordneten asymmetrischen kryptographischen Schlüsselpaars, wobei das asymmetrische kryptographische Schlüsselpaar einen privaten kryptographischen Schlüssel (110) als Signaturschlüssel zum Erstellen von digitalen Signaturen (113) des Nutzers und einen öffentlichen kryptographischen Schlüssel (112) als Signaturprüfschlüssel zum Prüfen von mit dem Signaturschlüssel (110) erstellten digitalen Signaturen (113) umfasst,
o Erzeugen einer dem registrierten Nutzer eindeutig zugeordneten serverseitigen zweiten Telefonnummer (118),
o Einrichten eines serverseitigen Instant-Messaging-Accounts bei dem Instant-Messaging-Dienst unter Verwendung der dem Nutzer eindeutig zugeordneten serverseitigen zweiten Telefonnummer (118),
o Senden einer Kontaktanfrage von dem serverseitigen Instant-Messaging-Account an einen nutzerseitigen Instant-Messaging-Account unter Verwendung der nutzerseitigen ersten Telefonnummer (116),
o Empfangen einer Kontaktbestätigung von dem nutzerseitigen Instant-Messaging-Account als Bestätigung eines erfolgreichen Einrichtens des Fernsignaturdienstes über den Instant-Messaging-Dienst,
• Empfangen einer Signaturanfrage zum Erstellen einer digitalen Signatur (113) für ein digitales Dokument (210) mit dem Signaturschlüssel (110) vom dem nutzerseitigen Instant-Messaging-Account über den serverseitigen Instant-Messaging-Account,
• Erstellen einer digitalen Signatur (113) für das zu signierende digitale Dokument (210) unter Verwendung des Signaturschlüssels (110),
• Senden der digitalen Signatur (113) über den serverseitigen Instant-Messaging-Account an den nutzerseitigen Instant-Messaging-Account.

17. System (101) zum Bereitstellen eines Fernsignaturdienstes unter Verwendung eines Instant-Messaging-Dienstes, wobei das System (101) einen Server (100) nach Anspruch 16 sowie ein mobiles tragbares Endgerät (200) eines Nutzers umfasst.

## Claims

1. A method for providing a remote signature service using an instant messaging service, the method by way of a server (100) of the remote signature service comprising:
• registering a user to use the remote signature service, the registration comprising:
o receiving a registration request for registering the user from a computer system (200; 240) of the user via a network (150), wherein the registration request includes a user-side first telephone number (116) of the user;
o generating and storing, on the server side, an asymmetric cryptographic key pair that is uniquely assigned to the registered user, wherein the asymmetric cryptographic key pair includes a private cryptographic key (110) serving as a signature key for creating digital signatures (113) of the user and a public cryptographic key (112) serving as a signature verification key for verifying digital signatures (113) created with the signature key (110);
o generating a server-side second telephone number (118) that is uniquely assigned to the registered user;
o setting up a server-side instant messaging account with the instant messaging service using the server-side second telephone number (118) uniquely assigned to the user;
o transmitting a contact request from the server-side instant messaging account to a user-side instant messaging account using the user-side first telephone number (116);
o receiving a contact confirmation from the user-side instant messaging account as confirmation of a successful set-up of the remote signature service via the instant messaging service;
• receiving a signature request for creating a digital signature (113) for a digital document (210) by way of the signature key (110) from the user-side instant messaging account via the server-side instant messaging account;
• creating a digital signature (113) for the digital document (210) to be signed using the signature key (110); and
• transmitting the digital signature (113) via the server-side instant messaging account to the user-side instant messaging account.

2. The method according to claim 1, wherein the digital signature (113) is transmitted together with the digital document (210) as a signed digital document via the server-side instant messaging account to the user-side instant messaging account.

3. The method according to any one of the preceding claims, wherein the method furthermore comprises providing a certificate of a PKI which includes the signature verification key (112), the digital signature (113) being transmitted together with the certificate via the server-side instant messaging account to the user-side instant messaging account.

4. The method according to any one of the preceding claims, wherein the prerequisite for the signing of the digital document (210) is that an additional signature confirmation of the user is received.

5. The method according to claim 4, wherein the method furthermore comprises:
• transmitting a first TAN (120) to the user,
• receiving the first TAN (120) as an additional signature confirmation of the user from the user-side instant messaging account via the server-side instant messaging account.

6. The method according to claim 5, wherein the first TAN (120) is an SMS TAN which is transmitted by way of an SMS to the user-side first telephone number (116) of the user, or
wherein the first TAN (120) is transmitted by way of an automatically generated voice message to the user-side first telephone number (116) of the user, or
wherein the first TAN (120) is transmitted by way of an e-mail to an e-mail address of the user.

7. The method according to claim 4, wherein a confirmation request is transmitted in the form of a push message to a confirmation application implemented on a mobile portable terminal of the user, the additional signature confirmation of the user being received in response to the confirmation request from the confirmation application.

8. The method according to any one of the preceding claims, wherein the digital document (210) to be signed is received by the user-side instant message account via the server-side instant message account.

9. The method according to claim 8, wherein the signature request is received in the form of the digital document (210) to be signed.

10. The method according to claim 8, wherein the signature request includes the digital document (210) to be signed in the form of a message test, a text file, an image file, or a video file.

11. The method according to any one of claims 1 to 7, wherein the signature request includes a hash value of the document (210) to be signed, which is used to create the digital signature (113) for the digital document (210) to be signed.

12. The method according to any one of claims 1 to 7, wherein the signature request includes information of a network address via which the digital document to be signed can be read out from the server (100), the method furthermore comprising reading out the digital document to be signed using the network address.

13. The method according to claim 12, wherein the signature request furthermore includes a second TAN for authenticating a read authorization for reading out the digital document (210) to be signed, the server (100) using the second TAN for authenticating the read authorization when reading out the digital document (210) to be signed using the network address.

14. The method according to any one of the preceding claims, wherein the registration of the user furthermore comprises identifying the user.

15. The method according to any one of the preceding claims, wherein the method furthermore comprises entering the created signature (113) into a blockchain (328).

16. A server (100) for providing a remote signature service using an instant messaging service, wherein the server (100) comprises a processor (102) and a memory (106) including program instructions (104), the server (100) comprising a communication interface (122) for the communication via a network (150), and an execution of the program instructions (104) by the processor (102) prompting the processor (102) to control the server (100) to:
• register a user to use the remote signature service, the registration comprising:
o receiving a registration request for registering the user from a computer system (200; 240) of the user via a network (150), wherein the registration request includes a user-side first telephone number (116) of the user;
o generating and storing, on the server side, an asymmetric cryptographic key pair that is uniquely assigned to the registered user, wherein the asymmetric cryptographic key pair includes a private cryptographic key (110) serving as a signature key for creating digital signatures (113) of the user and a public cryptographic key (112) serving as a signature verification key for verifying digital signatures (113) created with the signature key (110);
o generating a server-side second telephone number (118) that is uniquely assigned to the registered user;
o setting up a server-side instant messaging account with the instant messaging service using the server-side second telephone number (118) uniquely assigned to the user;
o transmitting a contact request from the server-side instant messaging account to a user-side instant messaging account using the user-side first telephone number (116);
o receiving a contact confirmation from the user-side instant messaging account as confirmation of a successful set-up of the remote signature service via the instant messaging service;
• receive a signature request for creating a digital signature (113) for a digital document (210) by way of the signature key (110) from the user-side instant messaging account via the server-side instant messaging account;
• create a digital signature (113) for the digital document (210) to be signed using the signature key (110); and
• transmit the digital signature (113) via the server-side instant messaging account to the user-side instant messaging account.

17. A system (101) for providing a remote signature service using an instant message service, wherein the system (101) comprises a server (100) according to claim 16 and a mobile portable terminal (200) of a user.

## Revendications

1. Procédé de fourniture d'un service de signature à distance en utilisant un service de messagerie instantanée, le procédé comprenant par le biais d'un serveur (100) du service de signature à distance les étapes consistant à :
• enregistrer un utilisateur pour utiliser le service de signature à distance, l'enregistrement comprenant les étapes consistant à :
o recevoir une requête d'enregistrement pour enregistrer l'utilisateur à partir d'un système informatique (200 ; 240) de l'utilisateur par l'intermédiaire d'un réseau (150), dans lequel la requête d'enregistrement inclut un premier numéro de téléphone côté utilisateur (116) de l'utilisateur ;
o générer et stocker, côté serveur, une paire de clés cryptographiques asymétriques qui est attribuée de manière unique à l'utilisateur enregistré, dans lequel la paire de clés cryptographiques asymétriques inclut une clé cryptographique privée (110) servant de clé de signature pour créer des signatures numériques (113) de l'utilisateur et une clé cryptographique publique (112) servant de clé de vérification de signature pour vérifier des signatures numériques (113) créées avec la clé de signature (110) ;
o générer un second numéro de téléphone côté serveur (118) qui est attribué de manière unique à l'utilisateur enregistré ;
o mettre en place un compte de messagerie instantanée côté serveur avec le service de messagerie instantanée en utilisant le second numéro de téléphone côté serveur (118) attribué de manière unique à l'utilisateur ;
o transmettre une requête de contact à partir du compte de messagerie instantanée côté serveur à un compte de messagerie instantanée côté utilisateur en utilisant le premier numéro de téléphone côté utilisateur (116) ;
o recevoir une confirmation de contact du compte de messagerie instantanée côté utilisateur en tant que confirmation d'une mise en place réussie du service de signature à distance par l'intermédiaire du service de messagerie instantanée ;
• recevoir une requête de signature pour créer une signature numérique (113) pour un document numérique (210) par le biais de la clé de signature (110) depuis le compte de messagerie instantanée côté utilisateur par l'intermédiaire du compte de messagerie instantanée côté serveur ;
• créer une signature numérique (113) pour que le document numérique (210) soit signé en utilisant la clé de signature (110) ; et
• transmettre la signature numérique (113) par l'intermédiaire du compte de messagerie instantanée côté serveur au compte de messagerie instantanée côté utilisateur.

2. Procédé selon la revendication 1, dans lequel la signature numérique (113) est transmise conjointement avec le document numérique (210) en tant que document numérique signé par l'intermédiaire du compte de messagerie instantanée côté serveur au compte de messagerie instantanée côté utilisateur.

3. Procédé selon l'une quelconque des revendications précédentes, dans lequel le procédé comprend en outre une étape consistant à fournir un certificat d'une PKI qui inclut la clé de vérification de signature (112), la signature numérique (113) étant transmise conjointement avec le certificat par l'intermédiaire du compte de messagerie instantanée côté serveur au compte de messagerie instantanée côté utilisateur.

4. Procédé selon l'une quelconque des revendications précédentes, dans lequel le prérequis pour l'étape consistant à signer le document numérique (210) est qu'une confirmation de signature supplémentaire de l'utilisateur soit reçue.

5. Procédé selon la revendication 4, dans lequel le procédé comprend en outre les étapes consistant à :
• transmettre un premier TAN (120) à l'utilisateur,
• recevoir le premier TAN (120) en tant que confirmation de signature supplémentaire de l'utilisateur depuis le compte de messagerie instantanée côté utilisateur par l'intermédiaire du compte de messagerie instantanée côté serveur.

6. Procédé selon la revendication 5, dans lequel le premier TAN (120) est un TAN par SMS qui est transmis par le biais d'un SMS au premier numéro de téléphone côté utilisateur (116) de l'utilisateur, ou
dans lequel le premier TAN (120) est transmis par le biais d'un message vocal généré automatiquement au premier numéro de téléphone côté utilisateur (116) de l'utilisateur, ou
dans lequel le premier TAN (120) est transmis par le biais d'un e-mail à l'adresse e-mail de l'utilisateur.

7. Procédé selon la revendication 4, dans lequel une requête de confirmation est transmise sous la forme d'un message push à une application de confirmation mise en œuvre sur un terminal portable mobile de l'utilisateur, la confirmation de signature supplémentaire de l'utilisateur étant reçue en réponse à la requête de confirmation depuis l'application de confirmation.

8. Procédé selon l'une quelconque des revendications précédentes, dans lequel le document numérique (210) à signer est reçu par le compte de messagerie instantanée côté utilisateur par l'intermédiaire du compte de messagerie instantanée côté serveur.

9. Procédé selon la revendication 8, dans lequel la requête de signature est reçue sous la forme du document numérique (210) à signer.

10. Procédé selon la revendication 8, dans lequel la requête de signature inclut le document numérique (210) à signer sous la forme d'un test de message, d'un fichier texte, d'un fichier image ou d'un fichier vidéo.

11. Procédé selon l'une quelconque des revendications 1 à 7, dans lequel la requête de signature inclut une valeur de hachage du document (210) à signer, qui est utilisée pour créer la signature numérique (113) pour le document numérique (210) à signer.

12. Procédé selon l'une quelconque des revendications 1 à 7, dans lequel la requête de signature inclut des informations d'une adresse réseau par l'intermédiaire de laquelle le document numérique à signer peut être lu à partir du serveur (100), le procédé comprenant en outre la lecture du document numérique à signer en utilisant l'adresse réseau.

13. Procédé selon la revendication 12, dans lequel la requête de signature inclut en outre un second TAN pour authentifier une autorisation en lecture afin de lire le document numérique (210) à signer, le serveur (100) utilisant le second TAN pour authentifier l'autorisation en lecture lors de la lecture du document numérique (210) à signer en utilisant l'adresse réseau.

14. Procédé selon l'une quelconque des revendications précédentes, dans lequel l'enregistrement de l'utilisateur comprend en outre une étape consistant à identifier l'utilisateur.

15. Procédé selon l'une quelconque des revendications précédentes, dans lequel le procédé comprend en outre une étape consistant à entrer la signature créée (113) dans une blockchain (328).

16. Serveur (100) destiné à fournir un service de signature à distance en utilisant un service de messagerie instantanée, dans lequel le serveur (100) comprend un processeur (102) et une mémoire (106) incluant des instructions de programme (104), le serveur (100) comprenant une interface de communication (122) pour la communication par l'intermédiaire d'un réseau (150), et une exécution des instructions de programme (104) par le processeur (102) invitant le processeur (102) à commander le serveur (100) à :
• enregistrer un utilisateur pour utiliser le service de signature à distance, l'enregistrement comprenant les étapes consistant à :
o recevoir une requête d'enregistrement pour enregistrer l'utilisateur à partir d'un système informatique (200 ; 240) de l'utilisateur par l'intermédiaire d'un réseau (150), dans lequel la requête d'enregistrement inclut un premier numéro de téléphone côté utilisateur (116) de l'utilisateur ;
o générer et stocker, côté serveur, une paire de clés cryptographiques asymétriques qui est attribuée de manière unique à l'utilisateur enregistré, dans lequel la paire de clés cryptographiques asymétriques inclut une clé cryptographique privée (110) servant de clé de signature pour créer des signatures numériques (113) de l'utilisateur et une clé cryptographique publique (112) servant de clé de vérification de signature pour vérifier des signatures numériques (113) créées avec la clé de signature (110) ;
o générer un second numéro de téléphone côté serveur (118) qui est attribué de manière unique à l'utilisateur enregistré ;
o mettre en place un compte de messagerie instantanée côté serveur avec le service de messagerie instantanée en utilisant le second numéro de téléphone côté serveur (118) attribué de manière unique à l'utilisateur ;
o transmettre une requête de contact à partir du compte de messagerie instantanée côté serveur à un compte de messagerie instantanée côté utilisateur en utilisant le premier numéro de téléphone côté utilisateur (116) ;
o recevoir une confirmation de contact du compte de messagerie instantanée côté utilisateur en tant que confirmation d'une mise en place réussie du service de signature à distance par l'intermédiaire du service de messagerie instantanée ;
• recevoir une requête de signature pour créer une signature numérique (113) pour un document numérique (210) par le biais de la clé de signature (110) depuis le compte de messagerie instantanée côté utilisateur par l'intermédiaire du compte de messagerie instantanée côté serveur ;
• créer une signature numérique (113) pour que le document numérique (210) soit signé en utilisant la clé de signature (110) ; et
• transmettre la signature numérique (113) par l'intermédiaire du compte de messagerie instantanée côté serveur au compte de messagerie instantanée côté utilisateur.

17. Système (101) destiné à fournir un service de signature à distance en utilisant un service de messagerie instantanée, dans lequel le système (101) comprend un serveur (100) selon la revendication 16 et un terminal portable mobile (200) d'un utilisateur.
